# EUROPÄISCHE PATENTSCHRIFT

(11) **EP 1 986 770 B1**
(45) Veröffentlichungstag und Bekanntmachung des Hinweises auf die Patenterteilung: **28.07.2010**
(21) Anmeldenummer: 07711485.8
(22) Anmeldetag: 09.02.2007
(51) Int. Cl.: B01F 15/04, B01F 15/00, H01R 13/00, G01G 17/06, G05D 11/13

(54) **DOSIERSTATION UND VERFAHREN ZUR DOSIERUNG HOCHVISKOSER FLÜSSIGKEITEN**
METERING STATION AND PROCESS FOR METERING HIGHLY VISCOUS LIQUIDS
POSTE DE DOSAGE ET PROCEDE DE DOSAGE DE LIQUIDES TRES VISQUEUX

(30) Priorität: 10.02.2006 DE 102006006288
(43) Veröffentlichungstag der Anmeldung: 05.11.2008
(73) Patentinhaber: HTE Aktiengesellschaft The High Throughput Experimentation Company, 69123 Heidelberg (DE)
(72) Erfinder: ZECH, Torsten, 70563 Stuttgart (DE); KAISER, Gunilla, 69181 Leimen (DE); VIETZE, Uwe, 69214 Eppelheim (DE); MATHES, Volker, 69214 Eppelheim (DE); GUELLICH, Frank, 69207 Sandhausen (DE)
(74) Vertreter: Tostmann, Holger Carl
(86) Internationale Anmeldenummer: PCT/EP2007/001116
(87) Internationale Veröffentlichungsnummer: WO 2007/090665

(56) Entgegenhaltungen:
- EP-A- 1 278 275
- WO-A-03/047737
- DE-A1- 3 936 928
- DE-A1- 4 002 255
- DE-A1- 10 016 659
- DE-U1- 20 011 779
- FR-A1- 2 879 029
- US-A- 3 673 541
- BEETZ B H: "AUTOMATISIERUNG VON GEMENGEANLAGEN: MODULARER AUFBAU SORGT FUR FLEXIBILITAT" CHEMIETECHNIK, HUTHIG, HEIDELBERG, DE, Bd. 24, Nr. 3, 1. März 1995 (1995-03-01), Seiten 38-40, XP000503198 ISSN: 0340-9961
- SANDER M: "DOSIERUNG VON FLUSSIGKEITEN MIT DOSIER-DIFFERENTIALWAAGEN" WAGEN UND DOSIEREN, VERLAGSGES. KEPPLER, MAINZ, DE, Bd. 25, Nr. 1, 1. Februar 1994 (1994-02-01), Seiten 11-17, XP000428629 ISSN: 0342-5916
- HOLTGREWE S: "FLEXIBILITAET DURCH MODULARITÄT: KOMBI-STECKVERBINDER" F & M. FEINWERKTECHNIK & MESSTECHNIK, HANSER VERL., MUNCHEN, DE, Bd. 103, Nr. 9, 1. September 1995 (1995-09-01), Seiten 518-520, XP000527948 ISSN: 0944-1018

## Beschreibung

Die vorliegende Erfindung betrifft eine Dosierstation und ein Verfahren zur Dosierung hochviskoser Flüssigkeiten.

Die Herstellung von neuen Materialien, insbesondere von Substanzformulierungen, sowie die Optimierung bereits bekannter Substanzformulierungen, die sich aus einer Vielzahl von unterschiedlichen Komponenten zusammensetzen, ist in vielen technischen Bereichen von großer wirtschaftlicher Bedeutung. In vielen Anwendungsbereichen, beispielsweise bei der Herstellung von Pharmazeutika, Kosmetika, Kunststoffen, Farbmischungen, Klebstoffen, Lebensmitteln etc., ist es erforderlich, dass eine gewünschte Substanzformulierung mittels geeigneter Dosierverfahren aus einer großen Anzahl an unterschiedlichen flüssigen und gegebenenfalls auch festen Ausgangskomponenten mit hoher Präzision innerhalb sehr kurzer Zeit hergestellt werden kann.

Die unterschiedlichen flüssigen und gegebenenfalls zumindest zum Teil auch festen Ausgangskomponenten, die zur Herstellung einer komplexen Substanzformulierung zu dosieren sind, weisen oftmals unterschiedliche Eigenschaften auf, insbesondere bezüglich ihrer Dichte und Viskosität. Damit sind konventionelle Vorrichtungen und Verfahren zur Dosierung von Flüssigkeiten mit geringer Viskosität, insbesondere mit der Viskosität von Wasser oder wässrigen Lösungen, nicht für das Herstellen von Substanzformulierungen geeignet, die zumindest eine Flüssigkeit mit mittlerer oder mit hoher Viskosität aufweisen soll. Insbesondere eignen sich Pipettierautomaten nicht für die Dosierung von Flüssigkeiten mittlerer oder hoher Viskosität.

Zur Dosierung von Flüssigkeiten, die höhere oder hohe Viskositäten aufweisen ist es üblich, diese mittels einer Druckgasbeaufschlagung aus einem Vorratsbereich in ein Aufnahmegefäß zu transferieren.

Beispielsweise beschreibt die WO 03/047737 A1 eine Vorrichtung zur Dosierung von Flüssigkomponenten, die aus einer bestimmten Anzahl von unterschiedlichen mit Flüssigkeiten befüllten Vorratsbehältern besteht. Den einzelnen Vorratsbehältern wird zunächst ein Inertgas zugeführt, welches innerhalb eines jeden einzelnen Behälters einen definierten Überdruck aufbaut. Jeder einzelne Vorratsbehälter verfügt dabei über eine mit einem Steuerventil versehene Ausgangsleitung, die sich oberhalb eines auf einer Waage befindlichen Synthesebehälters befindet. Mit Hilfe einer Prozess-Steuerung wird sowohl die Öffnungszeit des Steuerventils registriert als auch die Gewichtszunahme im beaufschlagten Synthesebehälter durch Aufnahme von Flüssigkeit aus dem Vorratsbehälter. Bei Verwendung von entsprechend kurzen Schaltzeiten für die Öffnung des Ventils in Verbindung mit einer schrittweisen Kontrolle der Gewichtszunahme können vorbestimmte Mengen an hochviskoser Flüssigkeit kontrolliert in den Synthesebehälter transferiert werden.

WO 03/047737 ist im Wesentlichen auf das genaue Erfassen und Protokollieren der in jedem Teilschritt zu dosierenden Menge an einer Komponente gerichtet. Bezüglich der Anordnung und Ausgestaltung der Vorratsbehälter für die einzelnen Komponenten wird wenig offenbart.

US 3,673,541 offenbart einen lösbaren Steckverbinder, der dadurch gekennzeichnet ist, dass dieser Anschlussstöpsel mit elektrischen Kontakten und einer Schlauchverbindung und eine Lochdose als Empfangsteil hat. Die Verbindungsstöpsel und Kupplung sind formschlüssig in Bezug auf die Lochkontakte und Kupplung. Die Schlauchkupplung ist abgedichtet gegen Leckage, wenn eine wirksame Verbindung hergestellt wird. Als Anwendungsgebiet des Steckverbinders wird das Gebiet der medizinische Diagnostik genannt.

EP 1 278 275 betrifft ein modulares Analysensystem, bei dem mehrere Analysensysteme durch einen Verbindungsstecker miteinander verbunden werden. Ein Teil des Verbindungssteckers verläuft unterhalb der Böden der Module. Der Verbindungsstecker ermöglicht eine Kommunikation zwischen den Analysesystemen, wobei der Verbindungsstecker vorzugsweise mit Elementen zur Stromversorgung und/oder Signalübertragung sowie mit einer fluidischen Verbindung ausgestattet ist. Der Verbindungsstecker kann als U-förmige Schiene ausgelegt sein, die mit Steckerbereichen versehen ist. Es wird ein Beispiel angegeben, bei dem das erfindungsgemäße Analysensystem zur Analyse von Blutproben eingesetzt wird.

FR 2 879 029 betrifft eine Vorrichtung zur Verbindung von einem Arbeitsmittel mit zwei Kabeln. Bei den Kabeln handelt es sich um Durchführungen für elektrische und pneumatische Informationen. Die Erfindung lässt sich insbesondere in einer Vorrichtung für eine barometrische Drucksonde auf der Außenhülle eine Luftfahrzeugs verwenden. Dieser Typ von Sonde verwirklicht die Messungen des Luftdrucks in der Umgebung des Luftfahrzeugs mit Hilfe der Druckdosen, die auf der Sonde und dem Sensor im Inneren des Luftfahrzeugs sitzen. Um die Verbindung zwischen den Steckern und der Sensorik sicherzustellen, trägt die Sonde einen pneumatischen Unterteil, auf welchem ein pneumatischer Stecker eingestöpselt ist, der mit der Sensorik durch ein Verbindungskabel angeschlossen ist. Außerdem ist es für Flüge eines Luftfahrzeugs in großer Höhe erforderlich, die Sonde zu erwärmen, beispielsweise mit einer Widerstandsheizung, die mit der Sonde verschmolzen ist. Die elektrische Versorgung des Widerstands wird dadurch sichergestellt, dass seitlich der Sonde entsprechende Kabel angebracht sind.

DE 39 36 928 offenbart einen elektropneumatischen Steckverbinder, der aus zwei Teilen besteht, die mit einander verbunden werden können. Der erste Teil des Steckverbinders weist einen Einsamt mit Steckerstiften oder Kontaktelementen auf und das andere Teil des Steckers weist einen Körperteil mit Kontaktbereichen von Kontaktelementen auf. In dem einen Teil des Steckers ist ein Dichtungselement vorgesehen, das beim Aufbringen eines axialen Druckes zwischen den Steckerteilen eine direkte Verbindung zwischen den Durchgängen herstellt. Zu den Vorteilen der Erfindung ist zu sagen, dass die Herstellung des Steckverbinders vereinfacht und verbilligt wird, da weniger Dichtungsstellen erforderlich sind, wobei sich der Steckverbinder auf das Zusammenfügen von Schläuchen und Kabeln bezieht.

Ein Artikel von Holgreve (in Feintechnik & Messtechnik 103 (1995) September No. 9, p. 518 - 520, siehe auch XP000527948) beschreibt einen modular aufgebauten Kombinationssteckverbinder. Der Steckverbinder ermöglicht es, dass unterschiedliche Leitungstypen innerhalb eines einzigen gemeinsamen Steckergehäuses mit dem jeweils gleichen Leitungstypen miteinander verbunden werden, wobei es sich bei den Leitungstypen um elektronische, optische oder pneumatische Leitungen handeln kann. Der modulare Aufbau bezieht sich auf die Anzahl und die Art der Module mit Stiften und Buchsen, die innerhalb eines Steckverbindungsgehäuses zusammengefasst werden können.

Eine der erfindungsgemäßen Aufgaben besteht darin, eine Dosierstation bereitzustellen, die es erlaubt, Flüssigkeiten mit erhöhter Viskosität zu dosieren, insbesondere von Flüssigkeiten mit einer Viskosität die mehr als das Hundertfache der Viskosität von Wasser beträgt. Dabei soll die Dosierstation teilweise oder vollständig automatisch betrieben werden, sowie gleichzeitig eine hohe Flexibilität bezüglich der Menge und/oder Art der zu dosierenden Substanzen aufweisen und es insbesondere erlauben, kombinatorisch eine Vielzahl verschiedener Substanzformulierungen bei hohem Durchsatz herzustellen. Weiterhin soll die Dosierstation möglichst geringe Abmessungen aufweisen, sowie kostengünstig und vielseitig einsetzbar sein.

Außerdem soll ein Verfahren bereitgestellt werden, welches es erlaubt, möglichst flexibel und unter möglichst hohem Durchsatz eine Vielzahl (gegebenenfalls verschiedener) Komponenten, die eine erhöhte Viskosität aufweisen, in ein Probenaufnahmegefäß einzudosieren. Das Verfahren soll es auch ermöglichen, zumindest zwei verschiedene Komponenten, gegebenenfalls in unterschiedlichen Mengenverhältnissen, so in zwei oder mehr verschiedene Probenaufnahmegefäße einzudosieren, dass zumindest zwei oder mehr unterschiedliche Substanzen oder Substanzformulierungen *parallel* hergestellt bzw. gemischt werden können.

Die erfindungsgemäße Dosierstation beziehungsweise das erfindungsgemäße Verfahren soll sich für die Hochdurchsatzformulierung von hochviskosen Flüssigkeiten eignen, d.h. ein möglichst schnelles Befüllen/Dosieren von Flüssigkeiten mit erhöhter Viskosität ermöglichen.

Der Begriff *"Flüssigkeiten",* wie er im Sinne der vorliegenden Erfindung verwendet wird, bezieht sich auf alle Flüssigkeiten, deren Viskosität in einem Bereich von 0,5 mPa·s bis 400 Pa·s, bevorzugt in einem Bereich von 1 mPa·s bis 100 Pa·s, weiter bevorzugt in einem Bereich von 100 mPa·s bis 40 Pa·s, weiter bevorzugt in einem Bereich von 100 mPa·s bis 10 Pa·s, liegt, jeweils gemessen bei 20°C. Nicht-Newtonsche Flüssigkeiten, Dispersionen, Suspensionen, Öle, Schmierstoffe und Pasten sind dabei auch *"Flüssigkeiten"* im Sinne der vorliegenden Erfindung. *"Hochviskose"* Flüssigkeiten oder *"Flüssigkeiten mit erhöhter Viskosität"* im Sinne der vorliegenden Erfindung haben eine Viskosität höher als Wasser, vorzugsweise höher als 5 mPa·s, weiter vorzugsweise höher als 50 mPa·s, weiter vorzugsweise höher als 100 mPa·s; weiter bevorzugt höher als 500 mPa·s, weiter bevorzugt höher als 1 Pa·s.

Die hier genannten und weitere Aufgaben werden dadurch gelöst; dass eine Dosierstation (10) zum Dosieren von zumindest einer Flüssigkeit mit erhöhter Viskosität bereitgestellt wird, die aus modularen Elementen aufgebaut ist.

Die erfindungsgemäße Dosierstation (10) umfaßt in einer Ausführungsform:
- zumindest vier Dosiermodule (1, 1');
- zumindest eine Halterung (7) zur Aufnahme der zumindest vier Dosiermodule (1,1');
- zumindest eine Waage (12) zur Aufnahme von unterschiedlichen Probenaufnahmegefäßen; sowie
- eine Prozess-Steuerung.

In einer anderen Ausführungsform gemäß der vorliegenden Erfindung umfaßt die Dosierstation (10) zum Dosieren von zumindest einer Flüssigkeit mit erhöhter Viskosität zumindest:
- zumindest vier Dosiermodule (1, 1') enthaltend zumindest ein Dosiermodul mit einer Flüssigkeit erhöhter Viskosität und enthaltend zumindest zwei Dosiermodule mit unterschiedlichen Flüssigkeiten;
- zumindest eine Halterung (7) zur Aufnahme der zumindest vier Dosiermodule (1, 1'), wobei die Halterung zugleich eine automatisierte Einheit zum Positionieren sein kann;
- zumindest eine automatisierte Einheit zum Positionieren der zumindest vier Dosiermodule, welche entweder die Halterung (7) sein kann oder eine hiervon unabhängige Einheit zum Positionieren;
- zumindest eine Waage (12) zur Aufnahme von Probenaufnahmegefäßen; sowie
- eine Prozess-Steuerung.

Dabei ist bevorzugt, dass jedes Dosiermodul (1,1') mit der Halterung (7) über ein Steckverbindungselement verbunden ist.

Als *"Waage"* (12) im Sinne der vorliegende Erfindung ist jedes Element oder Modul anzusehen, welches dazu geeignet ist, das Gewicht einer Flüssigkeit in einem Probenaufnahmegefäß zu bestimmen. Bezüglich der gegenständlichen Ausgestaltung der Waage bestehen keinerlei Beschränkungen. Die spezifische Art der Gewichtsbestimmung ist im Rahmen der vorliegenden Erfindung ohne Bedeutung, solange insgesamt eine Gewichtsänderung von der Prozess-Steuerung registriert werden kann. Eine "schnelle" Waage, d.h. eine Einheit zum Messen einer Gewichtsänderung mit schneller Reaktionszeit auf eine solche Gewichtsänderung ist im Rahmen der vorliegenden Erfindung bevorzugt.

Für das parallele Herstellen von mehr als einer Substanzformulierung kann in einer bevorzugten Ausführungsform mehr als eine Waage (12) pro Dosierstation (10) eingesetzt werden. In einer weiteren Ausführungsform kann auch mehr als ein Probenaufnahmegefäß auf einer Waage befindlich sein. In diesem Fall wird eine Gewichtsänderung in den zwei oder mehr Probenaufnahmegefäßen auf der einen Waage sequentiell bestimmt.

Die Waage (12) beziehungsweise auch die Waagen (12) umfassen vorzugsweise ein bewegliches Gehäuse bzw. eine Abdeckung (13), welches die Wägeplatte und das darauf befindliche Gefäß zur Aufnahme der Flüssigkeit vor Luftbewegungen in der Umgebung der Vorrichtung abschirmt beziehungsweise störende Einflüsse durch diese Luftbewegungen oder durch andere Umwelteinflüsse vermindert. Dieses bewegliche Gehäuse ist vorzugsweise derart ausgestaltet, dass es an der Oberseite eine Öffnung aufweist, wobei das Probenaufnahmegefäß unterhalb dieser Öffnung angeordnet ist, und die Flüssigkeit aus dem Dosierkopf durch die Öffnung in das Probenaufnahmegefäß dosiert werden kann. Als Waage (12) bevorzugt sind hoch auflösende Laborwaagen, deren Messbereich beispielsweise in einem Bereich von 0 bis 600 g, vorzugsweise von 0 bis 300 g liegt, und die eine Auflösung von ± 0,1 mg oder besser aufweisen.

Erfindungsgemäß dient die Halterung (7) dazu, die zumindest vier Dosiermodule (1, 1 ') aufzunehmen.

Gemäß einer bevorzugten Ausführungsform der vorliegenden Erfindung dient die Halterung (7) nicht nur zur Aufnahme der zumindest vier Dosiermodule (1, 1') sondern auch der Positionierung dieser zumindest vier Dosiermodule (1, 1') in Relation zum Probenaufnahmegefäß, oder in Relation zu einem anderen Zielpunkt, zu dem ein Dosiermodul bewegt werden soll. Im Sinne dieser Ausführungsform ist die Halterung (7) eine *"Einheit zum Positionieren"* im Sinne der vorliegenden Erfindung, d.h. ist in zumindest einer Raumrichtung beweglich.

Im Rahmen der vorliegenden Erfindung ist es wesentlich, dass mehr als zwei Dosiermodule (1,1') vorliegen. Dabei ist die genaue Zahl an eingesetzten Dosiermodulen für die Funktionsweise der vorliegenden Erfindung unerheblich. Es können mehr als 4, 6, 8, 12, 16, 24, 48 etc. Dosiermodule (1,1') in einer Halterung (7) nebeneinander vorliegen. Diese Dosiermodule (1, 1') sind vorzugsweise mit verschiedenen Flüssigkeiten befiillt, die sich bezüglich ihrer Viskosität deutlich unterscheiden können. Dadurch, dass verschiedene Flüssigkeiten in getrennten Dosiermodulen vorliegen, und dass diese von einem Punkt im Raum zu einem anderen bewegt werden können, können schnell und/oder mit hohem Durchsatz eine Vielzahl verschiedener Substanzformulierungen automatisiert hergestellt werden.

In einer weiter bevorzugten Ausführungsform gemäß der vorliegenden Erfindung umfaßt die Dosierstation (10) zusätzlich zu einer auch als Einheit zum Positionieren fungierenden Halterung (7) zumindest eine *weitere* Einheit zum Positionieren. Diese zumindest eine weitere Einheit zum Positionieren ist vorzugsweise dazu geeignet, entweder zumindest ein Dosiermodul (1,1') von einem Punkt im Raum zu einem anderen Punkt im Raum zu bewegen, oder zumindest ein Probenaufnahmegefäß von einem Punkt im Raum zu einem anderen. Die Einheit zum Positionieren kann auch dazu geeignet sein, beide Positionier-Schritte gleichzeitig oder nacheinander durchzuführen und/oder beliebige andere Module oder Elemente der Dosierstation von einem Punkt im Raum zu einem anderen zu bewegen.

Eine Einheit zum Positionieren kann für Verschiebungen in zwei ("x-y-Positioniereinheit") oder in drei ("x-y-z-Positioniereinheit") Raumrichtungen geeignet sein. Die Bewegungen der Einheit zum Positionieren können linear oder kreisförmig sein, bzw. aus Sequenzen hiervon zusaminengesetzt sein. Eine bevorzugte Einheit zum Positionieren ist eine Greifvorrichtung, d.h. ein Positionier-Roboter mit Greifarm. Der Greifarm kann dabei je nach Positionier-Aufgabe variabel gewählt und/oder ausgetauscht werden.

Mit Hilfe der Greifvorrichtung können gleiche, aber auch unterschiedliche Probenaufnahmegefäße von deren Standplätzen auf die Waage (12) und von der Waage zu deren Standplätzen bewegt werden. Weiterhin kann die automatische Greifvorrichtung (zusätzlich) zur Bestückung der einzelnen Plätze der Halterung (7) mit Dosiermodulen (1, 1') oder zum Austausch von Dosiermodulen (1, 1') auf den Plätzen der Halterung (7) verwendet werden, oder für alle der vorgenannten Operationen.

In einer bevorzugten Ausführungsform ist die Greifvorrichtung so ausgestaltet, dass diese sowohl bezüglich ihrer Form als auch bezüglich ihrer Größe unterschiedliche Dosiermodule (1, 1') handhaben kann, sowie zusätzlich auch in ihrer Form und/oder Größe unterschiedliche Probenaufnahmegefäße. Gegebenenfalls kann es notwendig und/oder sinnvoll sein, den Greifer einer Greifvorrichtung zwischen zwei Operationen auszutauschen, beispielsweise beim Übergang von der Operation *"Einsetzen eines besonders großen Dosiermoduls (1, 1')*" auf einen vorbestimmten Platz in der Halterung (7) zu *"Austausch eines besonders kleinen Probenaufnahmegefäßes auf der Waage (12)".*

Gemäß einer bevorzugten Ausführungsform der vorliegenden Erfindung wird das Dosiermodul (1,1') von der Halterung (7) und/oder einer Einheit zum Positionieren so in Relation zu einem Probenaufnahmegefäß positioniert, dass die auszudosierende Flüssigkeit beim Öffnen des entsprechenden Dosiermodules (1,1') in Richtung der Gravitation in dieses Probenaufnahmegefäß fließt. Bevorzugt ist das Dosiermodul (1,1') somit oberhalb des Probenaufnahmegefäßes positioniert.

Das Probenaufnahmegefäß gemäß der vorliegenden Erfindung ist dazu geeignet, zumindest eine der zudosierten Flüssigkeiten aufzunehmen. Das Probenaufnahmegefäß ist außerdem dazu geeignet, einen gegebenenfalls zudosierten Feststoff aufzunehmen. Bezüglich des Materials und der Ausgestaltung des Probenaufnahmegefäßes bestehen keine Beschränkungen. Im Sinne der vorliegenden Erfindung müssen die Probenaufnahmegefäße insbesondere nicht alle von der gleichen Form sein, sondern es können vielmehr auch unterschiedlich ausgeformte oder verschieden große Probenaufnahmegefäße eingesetzt werden. Bezüglich des Materials, aus dem das Probenaufnahmegefäß gefertigt ist, bestehen keine Beschränkungen, solange das Material sowohl mit den zudosierten Komponenten chemisch und physikalisch verträglich ist, als auch insbesondere für die gegebenenfalls beim Mischen von zwei oder mehr Komponenten auftretenden chemischen Reaktionen oder Temperaturänderungen aufgrund freiwerdender Mischungsenthalpie geeignet ist.

Im Sinne des modularen Aufbaus der gesamten Dosierstation (10) ist auch das Dosiermodul (1, 1') in einer bevorzugten Ausführungsform modular aufgebaut, d.h. zumindest zwei Komponenten des Dosiermoduls (1, 1') können voneinander gelöst und wieder miteinander verbunden werden, beziehungsweise durch eine andere Komponente ersetzt werden. In einer bevorzugten Ausführungsform können einzelne Komponenten von zwei verschiedenen Dosiermodulen miteinander ausgetauscht werden.

In einer bevorzugten Ausführungsform umfaßt ein Dosiermodul (1,1') zumindest eine Dosierspitze (2), einen Dosierkopf (3) und ein Vorratsgefäß (5). Dosierspitze, Dosierkopf und Vorratsgefäß befinden sich in fluidischer Verbindung.

In einer bevorzugten Ausführungsform sind Dosierspitze (2), Dosierkopf (3) und Vorratsgefäß (5) jeweils modular austauschbar. Es ist jedoch völlig im Einklang mit der vorliegenden Erfindung, wenn Dosierspitze (2), Dosierkopf (3) und Vorratsgefäß (5) integral miteinander ausgeformt sind. Zwischen Dosierspitze (2), Dosierkopf (3) und Vorratsgefäß (5) kann auch ein beliebig kontinuierlicher Übergang bestehen, solange die Funktionalitäten von *"Einheit zur Aufnahme einer Flüssigkeit erhöhter Viskosität", "Einheit zum Öffnen und Schließen des Flüssigkeitsdurchgangs durch einen Kanal zum Ausdosieren einer Flüssigkeit mit erhöhter Viskosität"* und *"Kanal"* innerhalb eines Dosiermoduls (1,1') erfüllt sind. Im Rahmen der gesamten vorliegenden Offenbarung und insbesondere auch im Sinne der Patentansprüche ist *"Vorratsgefäß* (*5*)" synonym zu verwenden mit *"Einheit zur Aufnahme einer Flüssigkeit erhöhter Viskosität", "Dosierkopf"* synonym mit *"Einheit zum Öffnen und Schließen des Flüssigkeitsdurchgangs durch einen Kanal zum Ausdosieren einer Flüssigkeit mit erhöhter Viskosität"* sowie *"Dosierspitze* (*2*)" synonym mit *"Kanal",* außer wenn dies im Zusammenhang mit einer besonderen Ausführungsform abweichend angegeben ist.

Die Dosierspitze (2) umfaßt zumindest einen Kanal mit bevorzugt kreisförmigem Innendurchmesser, durch welchen die auszudosierende Flüssigkeit hindurchtreten muss, um aus dem Dosiermodul heraus zu gelangen. Wenngleich der Kanal bevorzugt einen kreisförmigen Innendurchmesser aufweisen soll, so ist doch jede andere Geometrie für den Innendurchmesser eines solchen Kanals zulässig, beispielsweise eine elliptische oder eine polygonale, solange letztendlich Flüssigkeit durch Druckbeaufschlagung aus dem Dosiermodul durch den Kanal hindurch nach außen dosiert werden kann.

In einer Ausführungsform läuft der Kanal der Dosierspitze von innen nach außen konisch zu, d.h. verringert sich der Innendurchmesser über die Länge des Kanals. In einer anderen Ausführungsform bleibt der Innendurchmesser über die Länge des Kanals konstant.

Bezüglich der Länge des Kanals der Dosierspitze sowie des absoluten Wertes des Innendurchmessers bestehen keine Beschränkungen, solange letztendlich Flüssigkeit durch Druckbeaufschlagung aus dem Dosiermodul durch den Kanal hindurch nach außen dosiert werden kann. Je höher die Viskosität der Flüssigkeit ist, umso größer ist sinnvollerweise der Innendurchmesser des "Kanals".

In einer bevorzugten Ausführungsform umfaßt das Dosiermodul (1,1 ') zumindest eine *austauschbare* Dosierspitze (2).

Es ist bevorzugt, dass die Auswahl einer für die Dosierung einer bestimmten Flüssigkeit geeigneten Dosierspitze (2) im Rahmen eines Kalibrierschrittes bzw. basierend auf der Auswertung desselben erfolgt (siehe die unten angegebenen V erfahrensschritte).

Gemäß einer bevorzugten Ausführungsform der vorliegenden Erfindung dient der Dosierkopf (3) zur Aufnahme eines Ventils, oder ist dieses Ventil, wobei das besagte Ventil dazu dient, das Ausdosieren der Flüssigkeit zu kontrollieren. Im "geschlossenen Zustand" des Ventils darf keine Flüssigkeit durch die Dosierspitze (2) hindurchtreten. Im "offenen Zustand" des Ventils soll hingegen bei Druckbeaufschlagung Flüssigkeit durch die Dosierspitze (2) hindurchtreten können. Außer der Tatsache, dass ein "geschlossen" und ein "offen" Betriebszustand bereitgestellt werden muss, bestehen bezüglich der gegenständlichen Ausgestaltung des Dosierkopfes (3) bzw. des Ventils keinerlei Beschränkungen.

Gemäß einer bevorzugten Ausführungsform der vorliegenden Erfindung ist das Ventil ein pneumatisches Ventil, d.h. ein druckbeaufschlagtes Ventil oder ein elektrisch angesteuertes Ventil.

Bezüglich der gegenständlichen Ausgestaltung des Vorratsgefäßes (5) bestehen im Sinne der vorliegende Erfindung keinerlei Beschränkungen, solange das Vorratsgefäß zur Aufnahme einer Flüssigkeit erhöhter Viskosität geeignet ist.

Vorzugsweise besteht das Vorratsgefäß (5) aus modular aufgebauten Komponenten, die gegebenenfalls ausgetauscht werden können. So ist es bevorzugt, dass das Vorratsgefäß (5) einen Verschlussdeckel (50) umfaßt, der zur Befüllung des Vorratsgefäßes mit Flüssigkeit einfach geöffnet werden kann. Weiter ist es bevorzugt, dass das Vorratsgefäß (5) des Dosiermoduls (1, 1') abgenommen werden kann, um dieses zu reinigen. Eine gegebenenfalls vorliegende Verbindungsleitung (32) vom Vorratsgefäß (5) zum Steckverbindungselement (8) kann zur Reinigung beziehungsweise zum Austausch abmontiert werden.

Die einzelnen Vorratsgefäß (5) können sich in ihren Aufnahmekapazitäten voneinander unterscheiden. Bevorzugt liegt die Aufnahmekapazität der Vorratsgefäße im Bereich von 0,1 bis 1,5 Litern, wobei diese jedoch auch Aufnahmekapazitäten aufweisen können, die außerhalb des hier genannten Bereichs liegen.

Bei der Herstellung von bestimmten Substanzformulierungen kann eine große Menge an einer bestimmten Flüssigkeit benötigt werden, die dann von speziellen Vorratsbehältern, die nicht direkt auf dem Dosiermodul befestigt sind, bezogen werden. Diese Flüssigkeiten werden dann bevorzugt mittels Verbindungsleitungen direkt zum entsprechenden Dosierkopf (3) bzw. zur Dosierspitze (2) befördert. Die Verwendung dieser zusätzlichen Vorratsbehälter ist üblicherweise dann vorzuziehen, wenn die zu dosierenden Flüssigkeiten eine geringere Viskosität aufweisen.

Die Vorratsgefäße (5) bestehen vorzugsweise aus einem chemisch inerten Material, welches druck- und temperaturbeständig ist. Beispielsweise eignet sich Edelstahl; darüber hinaus kann dieser auch mit einer Inneneinlage aus Teflon ausgekleidet sein.

Die Vorratsgefäße (5) können prinzipiell über Füllstands-Sensoren verfügen. Jedoch ist es bevorzugt, die Prozess-Steuerung so auszulegen, dass die Menge an ausdosierter Flüssigkeit jeweils für die einzelnen Dosiermodule (1, 1') berechnet und überwacht werden kann. Die Prozess-Steuerung kann dadurch den jeweiligen Füllstand berechnen und auf einen vorzunehmenden Tausch des Dosiermoduls (1, 1') hinweisen, beziehungsweise diesen auch mittels eines automatisierten Greifarms durchführen.

Das Dosiermodul (1, 1') und dabei insbesondere das Vorratsgefäß (5) und/oder Dosierspitze (2) können mit einer Heizvorrichtung (4) und/oder einer Kühlung versehen sein und/oder geheizt und/oder gekühlt werden.

In einer bevorzugten Ausführungsform umfaßt das Dosiermodul (1, 1') zumindest eine Verbindungsleitung (32) zum Beaufschlagen der Flüssigkeit innerhalb des Vorratsgefäßes (5) des Dosiermoduls (1, 1') mit einem Druckgas.

Prinzipiell ist jeder Druck und jedes Gas zum Beaufschlagen der Flüssigkeit im Vorratsgefäß (5) geeignet, solange der über der Flüssigkeit aufgebaute Druck dazu führt, dass sich eine bestimmte Menge an Flüssigkeit aus dem Vorratsgefäß (5) des Dosiermoduls durch die Dosierspitze (2) hindurch, in ein Aufnahmegefäß überfahren läßt. Diese Drücke können beispielsweise im Bereich von 0,1 - 30 bar liegen, vorzugsweise in einem Bereich von 0,5 - 10 bar.

Falls die Viskosität der Flüssigkeit bei Raumtemperatur zu hoch sein sollte, so kann das Vorratsgefäß (5) und/oder die Dosierspitze (2) beheizt werden. Umgekehrt ist es möglich, bei zu geringer Viskosität die Flüssigkeit im Vorratsgefäß und/oder in der Dosierspitze zu kühlen. Optional ist es auch möglich, die Flüssigkeit im Vorratsgefäß (5) vor, nach oder während des/dem Dosiervorgang(s) mit einem Rührer (6) zu rühren.

Heizen kann auch sinnvoll sein, wenn eine feste oder zu dickflüssige Komponente vor dem Dosiervorgang aufgeschmolzen oder dünnflüssiger gemacht werden soll. Kühlen kann auch für Komponenten sinnvoll sein, die bei Raum- oder Betriebstemperatur nicht oder nicht ausreichend stabil sind. Prinzipiell kann jede flüssigkeitsführende Komponente des Dosiermoduls beheizt sein.

Gemäß einer bevorzugten Ausführungsform der vorliegende Erfindung umfaßt die Dosierstation (10) eine Einheit zur Druckkontrolle. Diese kontrolliert und regelt gegebenenfalls den Druck, welcher vorzugsweise über eine Verbindungsleitung (32) über der Flüssigkeit im Vorratsgefäß (5) aufgebaut wird. Vorzugsweise ist die Einheit zur Druckkontrolle Teil der Prozess-Steuerung und/oder kommuniziert mit selbiger. Somit kann beispielsweise die Einheit zur Druckkontrolle den Druck im Vorratsgefäß (5) erhöhen, wenn die Prozess-Steuerung im Rahmen eines Kalibrier-Schrittes feststellt, dass der eingestellte Druck nicht ausreicht, um eine ausreichende Menge an Flüssigkeit pro Zeiteinheit auszudosieren.

In einer weiteren Ausführungsform gemäß der vorliegenden Erfindung dient die Einheit zur Druckkontrolle auch dazu, den Druck für ein pneumatisches Ventil im Dosierkopf (3) einzustellen, d.h. das Ventil zu öffnen oder zu schließen. In diesem Fall ist die Verbindungsleitung (30) zwischen Steckverbindungselement (8) und Dosierkopf (3) eine (weitere) Druckleitung.

In einer weiteren bevorzugten Ausführungsform liegt neben der zumindest einen Verbindungsleitung (32) zur Zufuhr von Druckgas zum Vorratsgefäß (5) noch zumindest eine weitere Verbindungsleitung (30) vom Steckverbindungselement (8) zum Dosierkopf (3) vor. Diese Verbindungsleitung (30) ist in einer bevorzugten Ausführungsform eine elektrische Leitung im Falle dass das Ventil des Dosierkopfes (3) ein elektrisch geschaltetes Ventil ist und eine Druckleitung im Falle dass das Ventil des Dosierkopfes (3) ein pneumatisch geschaltetes Ventil ist.

Bezüglich der Halterung (7) der Dosierstation (10) zur Aufnahme der Dosiermodule (1, 1') besteht im Sinne der vorliegenden Erfindung keine prinzipielle Einschränkung, solange die Halterung (7) dazu geeignet ist, mindestens vier Dosiermodule (1, 1'), gegebenenfalls auch vier unterschiedliche Dosiermodule, aufzunehmen und diese in zumindest einer Raumrichtung zu positionieren.

Im erfindungsgemäßen Verfahren sind an der Halterung (7) Ausnehmungen vorgesehen, welche mit den entsprechenden Aussparungen eines Dosiermoduls (1, 1') in Eingriff gelangen können.

In einer bevorzugten Ausführungsform weist die Halterung (7) pro Dosiermodul ein Element zur Aufnahme und/oder Fixierung eines Dosiermoduls auf, vorzugsweise eine Aufnahmevorrichtung (9) für ein Steckverbindungselement (8) wie unten offenbart.

In einer bevorzugten Ausführungsformn der vorliegenden Erfindung ist die Halterung (7) zur Aufnahme der Dosiermodule als ein drehbares Karussell um einen axialen Schaft herum angeordnet. In dieser Ausführungsform können die einzelnen Dosiermodule mittels Drehbewegung in eine entsprechende Zielposition verschoben werden, so dass sich beispielsweise die Dosierspitze (2) über dem gewünschten Gefäß zur Aufnahme der zu dosierenden Flüssigkeit befindet. Dieses Gefäß kann beispielsweise ein Probenaufnahmegefäß sein oder ein Testgefäß.

Gemäß einer bevorzugten Ausführungsform umfaßt ein Dosiermodul (1, 1') zumindest ein Steckverbindungselement (8), mit dessen Hilfe das Dosiermodul (1, 1') mit einer entsprechenden Aufnahmevorrichtung (9) für die Steckverbindungselemente in Eingriff gebracht werden kann.

Die Aufnahmevorrichtungen (9) für Steckverbindungselemente (8) sind vorzugsweise integraler oder modularer Bestandteil der Halterung (7).

Bei den Steckverbindungselementen (8) handelt es sich bevorzugt um Multifunktionsstecker, die zumindest ein fluidisches Verbindungselement aufweisen. Dieses fluidische Verbindungselement führt bevorzugt zu einer Druckgasversorgungsleitung. Ein optionales weiteres Verbindungselement kann beispielsweise zu einer Inertgasversorgung führen.

In einer weiter bevorzugten Ausführungsform weist das Steckverbindungselement (8) zusätzlich zum zumindest einen fluidischen Verbindungselement auch zumindest ein elektrisches Verbindungselement zur Prozess-Steuerung auf.

In einer weiter bevorzugten Ausführungsform liegen zusätzlich zu dieser elektrischen Verbindung zur Prozess-Steuerung weitere elektrische Verbindungen zwischen dem Steckverbindungselement (8) des Dosiermoduls (1, 1') und der Aufnahmevorrichtung (9) für das Steckverbindungselement an der Halterung (7) vor, so wie beispielsweise Stromversorgungsleitungen, die in Verbindung mit Heiz- und/oder Rührvorrichtungen (4, 6) benötigt werden.

Darüber hinaus können in Gestalt des Steckverbindungselementes (8) auch Mittel zum Halten und/oder Fixieren des Dosiermoduls in der Aufnahmevorrichtung bereitgestellt werden. Somit erfüllt das Steckverbindungselement vorzugsweise nicht nur die Funktionalität einer fluidischen und/oder elektrischen Verbindung, sondern auch der mechanischen Halterung/Fixierung. Das Steckverbindungselement (8) ermöglicht dabei vorzugsweise das Eingreifen beziehungsweise Lösen eines Dosiermoduls (1) in eine beziehungsweise aus einer Aufnahmevorrichtung (9) durch eine einzige, im wesentlichen linear gerichtete Bewegung. Diese Bewegung wird vorzugsweise durch einen automatisierten Greifer ausgeführt.

In einer weiteren bevorzugten Ausführungsform wird das Anschließen eines Dosiermoduls (1, 1'), jeweils einhergehend mit dem Eingreifen oder Lösen einer elektrischen Steckverbindung, automatisch von der Prozess-Steuerung erkannt und ausgewertet.

In einer weiteren Ausführungsform kann das Dosiermodul (1, 1') spezifische Informationen gespeichert haben, beispielsweise betreffend die im Dosiermodul (1, 1 ') befindliche Flüssigkeit oder die am Dosierkopf (3) eingesetzte Dosierspitze (2). Vorzugsweise wird diese Information beim oder kurz nach dem Einsetzen des Dosiermoduls in die Halterung (7) automatisch von der Prozess-Steuerung erkannt. Vorzugsweise sind diese spezifischen Informationen auf einem magnetischen Speicherelement abgelegt, welches im Bereich des Steckverbindungselementes (8) positioniert ist.

In einer weiteren Ausführungsform ist das Dosiermodul (1,1') mit einem Barcode gekennzeichnet, und die Dosierstation (10) umfaßt eine entsprechende Lesevorrichtung zur Erkennung des Barcodes. Diese Ausführungsform ermöglicht das Erkennen des Dosiermoduls unabhängig von einer elektrischen Verbindung. Bevorzugt ist die Steuerung der Lesevorrichtung mit der Prozess-Steuerung verbunden.

Bei der Durchführung von bestimmten Dosierprozessen betreffend hochviskose Flüssigkeiten kann ein Beheizen, Kühlen oder Rühren der im Vorratsbehälter befindlichen Flüssigkeit erforderlich oder sinnvoll sein. Vorteilhaft ist hierbei die modulare Ausgestaltung der einzelnen Dosiermodule, da hiermit beispielsweise die Heizvorrichtung (4) oder die Rührvorrichtung (6) in einfacher Weise einem Dosiermodul (1, 1') hinzugefügt oder hiervon entfernt werden oder zwischen zwei Modulen ausgetauscht werden kann. Vorzugsweise ist die Heizung/Kühlung (4) mantelförmig und in thermischem Kontakt um das Vorratsgefäß (5) des Dosiermoduls (1, 1') herum angeordnet.

In einer bevorzugten Ausführungsform der vorliegenden Erfindung umfaßt die Dosierstation einen Abfallbehälter zur Aufnahme von Flüssigkeit aus zumindest einem Dosiermodul. Die in den Abfallbehälter eindosierte Flüssigkeitsmenge wird in dieser Ausführungsform nicht gravimetrisch bestimmt. Entsprechend ist der Abfallbehälter vorzugsweise nicht auf einer Waage (12) angeordnet. Jedoch ist es mittels der durch die Prozess-Steuerung vorgegebenen bzw. gemessenen Ventilöffnungszeiten des Dosierventils, des Innendurchmessers der Dosierspitze und der Art der zu dosierenden Substanz möglich, die in den Abfallbehälter eindosierte Flüssigkeitsmenge abzuschätzen. Das Eindosieren von Flüssigkeit aus einem oder mehreren Dosiermodul(en) in den zumindest einen Abfallbehälter kann beispielsweise zum Ausspülen von Verkrustungen aus der Dosierspitze dienen, die sich beim Verdunsten von Lösungsmittel aus der Dosierspitze bilden können.

In einer bevorzugten Ausführungsform umfaßt die Dosierstation (10) neben zumindest einem Probenaufnahmegefäß auch zumindest ein Testgefäß. Das Testgefäß unterscheidet sich vom Probenaufnahmegefäß dadurch, dass es nicht zur Herstellung einer Substanzformulierung dient sondern vielmehr im unten genauer beschriebenen Kalibrier-Schritt vor der eigentlichen Substanzformulierung eingesetzt wird, um die Dosierparameter von zumindest einem Dosiermodul (1, 1') zu bestimmen. Im Gegensatz zum Inhalt eines Probenaufnahmegefäßes wird der Inhalt eines Testgefäßes am Ende des erfindungsgemäßen Verfahrens nicht als Endprodukt (weiter)verwendet sondern fachgerecht entsorgt. Im Gegensatz zum Abfallbehälter befindet sich das Testgefäß vorzugsweise auf einer Waage (12), da mit dem Testgefäß eine gemäß Vorgabe einzufüllende Flüssigkeitsmenge mit einer tatsächlich zudosierten Flüssigkeitsmenge verglichen werden soll.

In einer weiteren, bevorzugten Ausführungsform verfügt die erfindungsgemäße Dosierstation (10) über eine Sensoreinrichtung, mit Hilfe derer die Position und/oder Positionierung der Dosierköpfe (3) bzw. Dosierspitzen (2) absolut und/oder relativ zum Probenaufnahmegefäß und/oder zur Waage und/oder zum Abdeckgehäuse bestimmt werden kann. Bevorzugt kommuniziert die Sensoreinrichtung mit der zentralen Prozess-Steuerung.

Ein Verfahren für das Hochdurchsatz-Dosieren von hochviskosen Flüssigkeiten bzw. für die Hochdurchsatzformulierung von hochviskosen Substanzen umfaßt zumindest die folgenden Schritte:
(i) Vorlegen von zumindest einer Flüssigkeit mit erhöhter Viskosität in zumindest einem Dosiermodul (1, 1') umfassend zumindest Vorratsgefäß (5), Dosierkopf (3) und Dosierspitze (2);
(ii) Bestücken einer Halterung (7) mit zumindest vier Dosiermodulen (1, 1'), wobei Schritt (ii) zeitlich auch vor Schritt (i) durchgeführt werden kann, und in jedem Fall als Ergebnis der Schritte (i) und (ii) zumindest ein Dosiermodul (1,1') enthaltend eine Flüssigkeit mit erhöhter Viskosität in einer Halterung (7) gemeinsam mit zumindest drei weiteren Dosiermodulen (1,1') vorliegen muss;
(iii)automatisiertes Positionieren von zumindest einem Dosiermodul (1, 1'), enthaltend eine Flüssigkeit mit erhöhter Viskosität, über zumindest einem Testgefäß auf einer Waage (12);
(iv) Durchführen eines Kalibrier-Schrittes mit dem zumindest einem Dosiermodul (1, 1') aus Schritt (iii) enthaltend eine Flüssigkeit mit erhöhter Viskosität, zur Bestimmung der Menge an besagter Flüssigkeit, die pro Zeiteinheit im geöffneten Zustand des Dosierkopfes (3) aus dem Vorratsgefäße (5) durch die Dosierspitze (2) ausdosiert wird;
(v) automatisiertes Positionieren zumindest des Dosiermoduls (1, 1') aus Schritt (iii) über zumindest einem Probenaufnahmegefäß auf einer Waage (12);
(vi)Durchführen zumindest eines Zieldosier-Schrittes, in welchem ein vorbestimmter Bruchteil der insgesamt in ein Probenaufnahmegefäß einzudosierenden Flüssigkeit, oder die gesamte vorbestimmte Flüssigkeitsmenge, aus dem Dosiermodul (1,1') aus Schritt (iii) in das Probenaufnahmegefäß auf der Waage (12) eindosiert wird.

Die Schritte (v) und (vi) können beliebig oft und für eine beliebige Zahl von Dosiermodulen (1,1') und/oder Probenaufnahmegefäße durchgeführt werden. Der Schritt (iv) wird stets vor den ersten der gegebenenfalls beliebig oft durchgeführten Schritten (v) und (vi) durchgeführt.

Das erfindungsgemäße Verfahren ergibt sich aus Anspruch 12.

In einer bevorzugten Ausführungsform hängt die Zahl an Zieldosier-Schritten (vi), d.h. an Dosierpulsen (siehe unten angegebene Beispiele) von der Gesamtmenge an einzudosierender Flüssigkeit ab.

Ein Vorteil der erfindungsgemäßen Verfahrensweise besteht darin, dass der Dosierparameter, d.h. die Flüssigkeitsmenge, die bei geöffnetem Ventil pro Zeiteinheit ausdosiert wird, *vor* dem eigentlichen (Ziel-)Dosiervorgang bestimmt wird. Rein prinzipiell wäre ein Bestimmen des Dosierparameters auch während des eigentlichen Zieldosier-Schrittes möglich, beispielsweise indem zunächst nur eine geringe Menge an Flüssigkeit in das Probenaufnahmegefäß zudosiert wird. Gerade bei hochviskosen Flüssigkeiten und der Verwendung einer Vielzahl verschiedener Flüssigkeiten, wie dies im Rahmen der Hochdurchsatz-Formulierung üblich ist, kann jedoch nicht immer sinnvoll (vor)bestimmt werden, was eine *"geringe Menge an Flüssigkeit"* im Einzelfall ist. So wäre es beispielsweise nicht tragbar, dass bei einer komplexen Formulierung bereits zehn Komponenten zudosiert wurden, die elfte Komponente aber im ersten Zieldosier-Schritt bereits über die insgesamt eingeplante Menge hinaus dosiert wird, weil die vorher nicht kalibrierte elfte Komponente wesentlich weniger viskos ist, als dies von der Prozess-Steuerung antizipiert wurde. Ein solches Szenario wird im erfindungsgemäßen Verfahren vermieden, da der Kalibrier-Schritt vor dem Zieldosier-Schritt erfolgt.

In einer bevorzugten Ausführungsform des erfindungsgemäßen Verfahrens werden sämtliche Dosiermodule (1, 1'), welche sich in der Halterung (7) befinden, einem Kalibrier-Schritt (iv) unterzogen, bevor insgesamt der erste Zieldosier-Schritt (vi) durchgeführt wird.

In einer bevorzugten Ausführungsform umfaßt der Kalibrier-Schritt (iv) zumindest die folgenden Schritte:
(a) Ausdosieren einer von der Prozess-Steuerung vorbestimmten Menge an Flüssigkeit in ein Testgefäß auf einer Waage (12) durch Öffnen des Dosierkopfes (3), d.h. vorzugsweise eines Dosierventils, für eine von der Prozess-Steuerung vorbestimmte technisch sinnvollen Schaltzeit;
(b) Auswiegen der tatsächlich ausdosierten Menge;
(c) Bestimmen der pro Zeiteinheit tatsächlich ausdosierten Flüssigkeitsmenge ("Dosierpararneter") unter Verwendung des Meßwerts aus (b) durch die Prozess-Steuerung und Vergleich des so bestimmten Dosierparameters mit einem gegebenenfalls von der Prozess-Steuerung vorbestimmten Sollwert;
(d) gegebenenfalls Anpassen der Parameter der Prozess-Steuerung, d.h. insbesondere von Druck über der Flüssigkeit, Art der Dosierspitze sowie Temperatur, um den Sollwert zu erreichen, sowie gegebenenfalls Wiederholen der Schritte (a) bis (c).

In einer bevorzugten Ausführungsform des erfindungsgemäßen Verfahrens wird der Zieldosier-Schritt (vi) in zumindest die folgenden Teilschritte aufgeteilt:
(vi') Durchführen eines ersten Zieldosier-Schrittes, in welchem ein vorbestimmter Bruchteil der insgesamt in ein Probenaufnahmegefäß einzudosierenden Flüssigkeit in ein Probenaufnahmegefäß auf einer Waage eindosiert wird, und zwar unter Verwendung der pro Zeiteinheit ausdosierten Flüssigkeitsmenge, wie diese im Kalibrier-Schritt (iv) bestimmt wurde;
(vi") Auswiegen der im Schritt (vi') tatsächlich zudosierten Flüssigkeitsmenge und Vergleich einem dem von der Prozess-Steuerung vorgegebenen Sollwert, gegebenenfalls mit nach dem Vergleich erfolgende Korrektur der pro Zeiteinheit ausdosierten Flüssigkeitsmenge;
(vi"') Durchführen eines zweiten Zieldosier-Schrittes, in welchem der fehlende Rest zur Gesamtmenge an insgesamt einzukassierender Flüssigkeit eindosiert wird, wiederum unter Verwendung der im Kalibrier-Schritt (iv) bestimmten Flüssigkeitsmenge pro Zeiteinheit, gegebenenfalls wie im Schritt (vi") korrigiert.

Der vorbestimmte Bruchteil der Gesamtmenge, der im Schritt (vi) oder (vi') zudosiert werden soll, liegt im Bereich von 10 bis 99 % der Gesamtmenge, vorzugsweise im Bereich von 40 bis 95 % der insgesamt zu dosierenden Menge, weiter vorzugsweise im Bereich von 50 bis 80 % der zu dosierenden Gesamtmenge.

In einer bevorzugten Ausführungsform werden Zieldosier-Schritte parallel für zumindest zwei verschiedene Flüssigkeiten in zumindest zwei verschiedenen Dosiermodulen (1, 1') durchgeführt, die in zumindest zwei verschiedene Probenaufnahmegefäße eingefüllt werden.

In Bezug auf Schritt (ii) ist es bevorzugt, dass die Halterung (7) in einfacher Weise automatisiert durch eine Einheit zum Positionieren, mit den zumindest vier Dosiermodulen (1, 1') bestückt wird. Bevorzugt ist die letzte Bewegung der Einheit zum Positionieren, welche das Dosiermodul (1, 1') mit der Halterung (7) in Eingriff und Halteschluss bringt, eine im wesentlichen lineare, einzige Bewegung.

In einem bevorzugten Verfahrensschritt werden in regelmäßigen Abständen kleine Mengen an Flüssigkeit aus den einzelnen Dosiermodulen (1, 1') in einen Abfallbehälter transferiert, beispielsweise um Konzentrationsänderungen oder Bildung von Abscheidungen und/oder Ablagerungen innerhalb der Dosierspitze (2) zu vermeiden. Die gegebenenfalls durch Verdunstung von Lösungsmittel verursachte Konzentrationsänderung in der Flüssigkeit, die in der Dosierspitze befindlich ist, sowie eine Ablagerung von höherviskosen oder festen Produkten in der Dosierspitze, sind unerwünscht, da hiermit die Genauigkeit des Dosierverfahrens beeinträchtigt werden kann. In einem weiteren Verfahrensschritt wird das Eindosieren von Flüssigkeit in einen Abfallbehälter nach einem Wechsel von einzelnen Elementen der Dosiermodule (1, 1') durchgeführt, um beispielsweise den Dosierkopf (3) und/oder eine ausgetauschte Dosierspitze (2) zu reinigen und/oder auf Funktionstüchtigkeit zu überprüfen.

Im oben beschriebenen Kalibrier-Schritt werden vorzugsweise Testdosierungen vorgenommen, bei denen die Parameter des Dosiermoduls (1, 1') - wie zum Beispiel der Druck oder die Temperatur im Vorratsgefäß (5), oder der freie Innendurchmesser der Dosierspitze (2) - in vorbestimmten Grenzen variiert werden, wobei die dabei dosierte Flüssigkeitsmenge gravimetrisch erfasst wird.

Dabei erfolgen die einzelnen Testdosierungen bevorzugt in ein auf der Waage befindliches Testgefäß. Das Testgefäß kann - genauso wie die Probenaufnahmegefäße - mittels einer Einheit zum Positionieren von einem Standplatz auf die Waage (12) sowie (zurück) zu einem Standplatz bewegt werden.

Im einer Ausführungsform des erfindungsgemäßen Verfahrens wird der mit Hilfe des Kalibrierschrittes (iv) ermittelte Dosierparameter direkt für die Durchführung der eigentlichen Zieldosier-Schritte eingesetzt. Werden mit den verschiedenen Flüssigkeiten eine Vielzahl von verschiedenen Substanzformulierungen hergestellt, so ist es zeitsparend, einmal alle Flüssigkeiten zu kalibrieren und dann für die Vielzahl an Zieldosier-Schritten einen verlässlichen Dosierparameter zu besitzen. Dies ist effektiver als vor jeder einzelnen Messung für jede einzelne Flüssigkeit den Dosierparameter neu zu bestimmen.

Sind Parameter des Dosiermoduls (1, 1') wie Temperatur, Art der Dosierspitze, Innendruck im Vorratsbehälter etc. entsprechend gewählt worden, so hängt die Genauigkeit der Dosierung, d.h. die Abweichung von einem vorgegebenen Sollwert, hauptsächlich von den Schaltzeiten des Ventils am Dosierkopf ab. Technisch realistisch sind Schaltzeiten von 100 Millisekunden und höher. Entsprechend müssen die oben genannten Parameter des Dosiermoduls, oder gegebenenfalls andere Parameter, variiert werden, falls der angestrebte Bruchteil an der Gesamtmenge nicht in einer technisch sinnvollen Schaltzeit zudosiert werden kann, d.h. in einer Zeit, die größer ist als beispielsweise 100 Millisekunden.

Im oben genannten Verfahrensschritt (vi") wird die tatsächlich zudosierte Flüssigkeitsmenge mit Hilfe einer Waage bestimmt und mit einem Sollwert, d.h. dem angestrebten Bruchteil der insgesamt zu dosierenden Menge, verglichen. Bei zu starker Abweichung der tatsächlich zudosierten Flüssigkeitsmenge von der berechneten Flüssigkeitsmenge kann die Kalibrierung in einer Art Rückkopplungsmechanismus notwendigenfalls korrigiert werden. Hierdurch wird die Genauigkeit für den zweiten (und vorzugsweisen letzten) Zieldosier-Schritt entsprechend hoch, so dass insgesamt eine hohe Dosiergenauigkeit erreicht wird.

In einer weiteren Ausführungsform des Verfahrens wird der Kalibrier-Schritt (iv) wiederholt, falls im Schritt (vi") die Abweichung zwischen der tatsächlich im ersten Schritt zudosierten Flüssigkeitsmenge und dem Sollwert größer sein sollte, als eine bestimmte, vorher zu bestimmende maximale Abweichung. Dies bedeutet, dass die Prozessteuerung nicht nur einzelne Dosiervorgänge steuert, sondern auch zur Überwachung des Systems eingesetzt werden kann.

Obwohl die vorliegende Erfindung insbesondere das Dosieren von flüssigen Komponenten in ein Probenaufnahmegefäß betrifft, können gemäß einer Ausführungsform des erfindungsgemäßen Verfahrens gleichzeitig oder zuvor oder danach auch feste Komponenten zudosiert werden.

In einer bevorzugten Ausführungsform des erfindungsgemäßen Verfahrens wird eine vollständige Entleerung eines Vorratsbehälters von der Prozess-Steuerung auch dann erkannt, wenn bei der Durchführung von Dosiervorgängen keine Gewichtszunahme auftreten sollte, jedoch ein Druckabfall innerhalb der Intergasleitung zu verzeichnen ist. In diesem Fall wird das Dosierventil automatisch geschlossen.

Bezüglich der Verarbeitung des Signals der Waage (12) ist eine Konfigurierung bevorzugt, durch welche die Mess-Signale in einem möglichst ungefilterten Zustand registriert und an die Prozess-Steuerung weitergeleitet werden. Hierdurch ist es zunächst möglich, dass in sehr kurzen Zeiten Gewichtsänderungen festgestellt und bestimmt werden können. Die von der Waage (12) registrierten Mess-Signale werden bevorzugt mit einer Übertragungsrate von 25 Hz an die Prozess-Steuerung weitergeleitet. Die Prozess-Steuerung übernimmt die Analyse der von der Waage übermittelten Signale zur Bestimmung von Gewicht und Stabilität der Gewichtswerte und wird dadurch in die Lage versetzt, besonders schnell auf eine Systemänderung zu reagieren. Die Filterparameter, die üblicherweise von der Waage auf die Wägesignale aufgeprägt werden, werden im Fall der vorliegenden Erfindung in dynamischer Weise durch die Prozess-Steuerung vorgenommen.

Eine nähere Beschreibung der Erfindung ist auch den in den Figuren dargestellten Zeichnungen zu entnehmen, die nachfolgend näher erläutert werden.

### Kurze Beschreibung der Figuren:

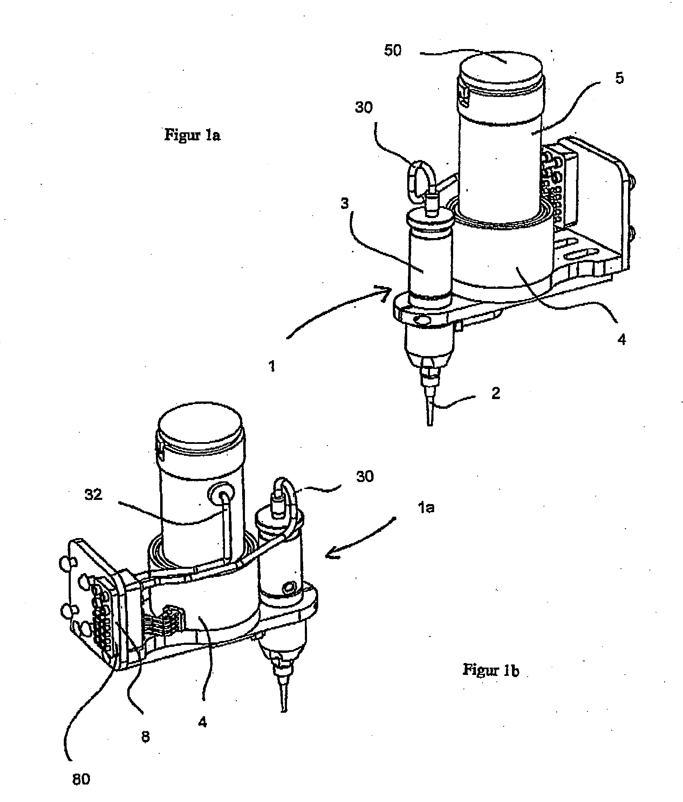

- Fig. 1.a: zeigt eine Aufsicht auf ein Dosiermodul (1);
- Fig. 1.b: zeigt das Dosiermodul aus Fig. 1.a in einer gedrehten Ansicht;
- Fig. 2: zeigt eine Halterung (7) gemäß einer Ausführungsform der vorliegenden Erfindung;
- Fig. 3: zeigt eine parellele Anordnung von drei Dosierstationen (10);
- Fig. 4: zeigt exemplarisch die Anordnung der (Gas)versorgungssysteme für eine spezielle Ausführungsform der Dosierstation (10);
- Fig. 5.a: zeigt den schematischen Aufbau eines Dosiermoduls mit Rührer;

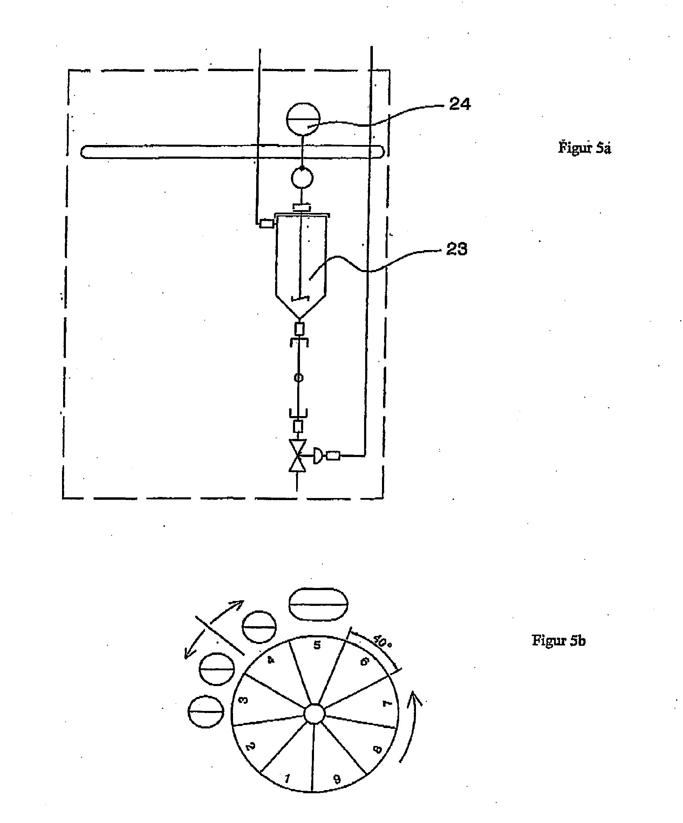

- Fig. 5.b: zeigt eine Aufsicht auf eine karussellförmige Halterung (7) gemäß einer besonderen Ausführungsform der vorliegenden Erfindung;

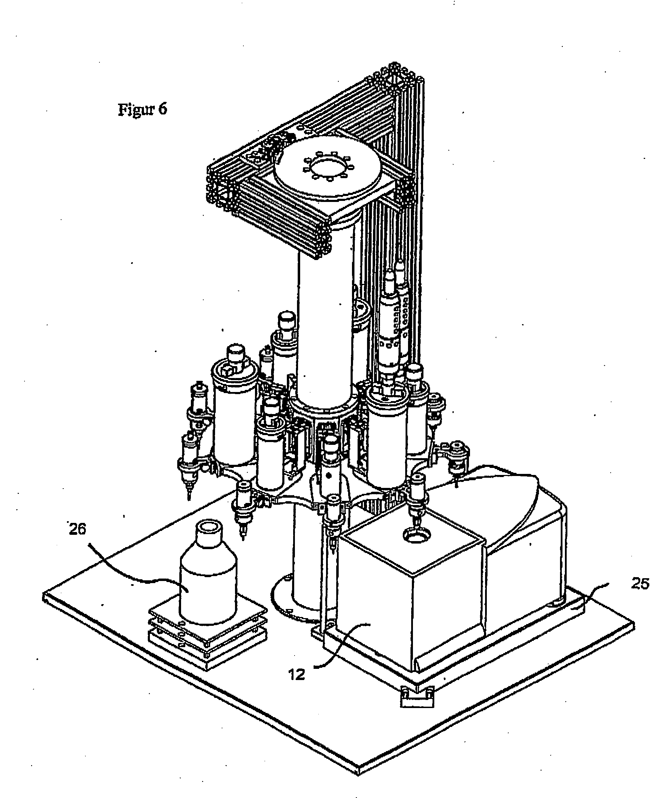

- Fig. 6: zeigt eine Dosierstation (10) gemäß einer besonderen Ausführungsform der vorliegenden Erfindung.

Fig. 1.a zeigt eine Aufsicht auf ein Dosiermodul (1), das ein Vorratsgefäß (5) mit Verschlussdeckel (50) und einem Dosierkopf (3) mit austauschbarer Dosierspitze (2) aufweist. In dieser Ausführungsform enthält der Dosierkopf (3) ein pneumatisches Schaltventil mit einer Druckgaszuführung (30). In dieser Ausführungsform ist die Heizung (4) mantelförmig um das Vorratsgefäß (5) herum angebracht. In anderen Ausführungsformen umfaßt die Heizung das gesamte Dosiermodul (1).

Fig. 1.b zeigt das Dosiermodul aus Fig. 1.a in einer gedrehten Ansicht, wobei die Rückseite des Steckverbindungselementes (8), sowie die Leitungen (30) und (32) jeweils vom Dosierkopf (3) und vom Vorratsbehälter (5) zum Steckverbindungselement (8) zu erkennen sind. In dieser Ausführungsform sind beide Leitungen Druckgasleitungen, einmal zu Druckgasbeaufschlagung der Flüssigkeit im Vorratsbehälter und einmal zur Ansteuerung eines pneumatischen Ventils im Dosierkopf (3).

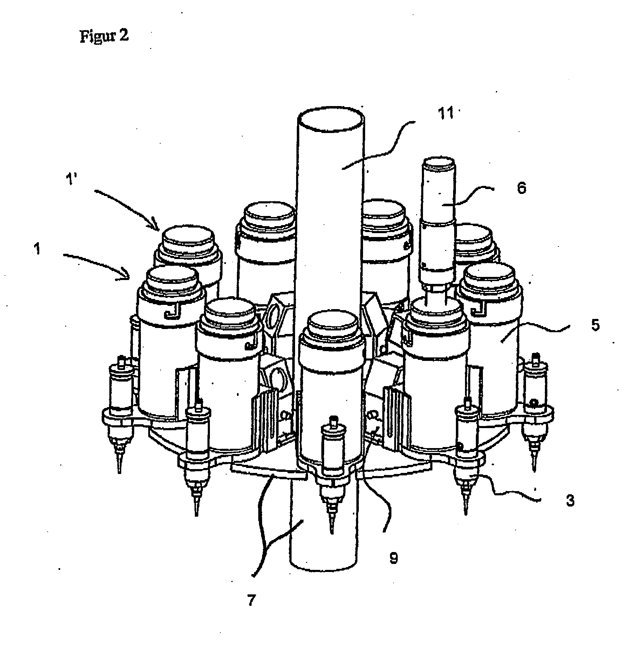

Fig.2 zeigt eine karusellförmige Halterung (7), die in dieser besonderen Ausführungsform mit neun Dosiermodulen (1, 1') bestückt ist. Jede beliebige höhere Zahl von Dosiermodulen ist für diese und für alle anderen Ausführungsformen der Erfindung denkbar, beispielsweise mehr als 12, mehr als 24 oder mehr als 48. Wie in Fig. 2 zu sehen ist, sind die Steckverbindungs-elemente (8) der Dosiermodule (1, 1') mit den Aufnahmevorrichtungen (9) der Halterung (7) verbunden. Somit ist jedes Dosiermodul fluidisch mit einer zentralen Fluidversorgung, beispielsweise einer zentralen Drucksgasversorgung verbunden, sowie elektrisch mit der zentralen Prozess-Steuerung. Diese elektrische Verbindung ermöglicht es der zentralen Prozess-Steuerung, das spezifische Dosiermodul zu "erkennen". Eines der neun Dosiermodule von Figur 2 ist mit einem Rührer (6) ausgestattet;

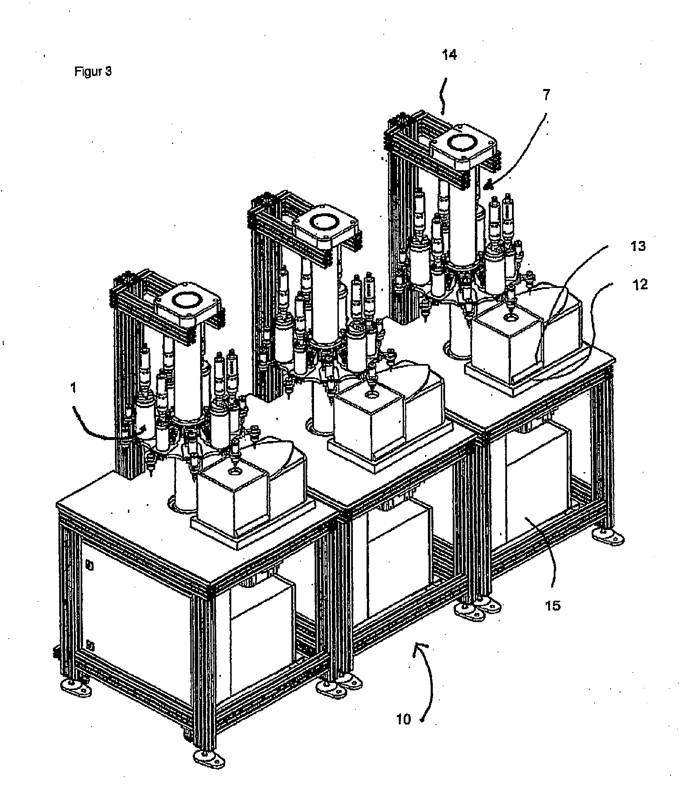

Fig. 3 zeigt eine parallele Anordnung von drei Dosierstationen (10). Jede einzelne Dosierstation verfügt über ein Gestell (14) zur Aufnahme von jeweils einer mit Dosiermodulen (1, 1') bestückten Halterung (7), einer Waage (12) mit beweglicher Abdeckung (13) und einer Steuervorrichtung (15), welche beispielsweise die zentrale Prozess-Steuerung umfassen kann.

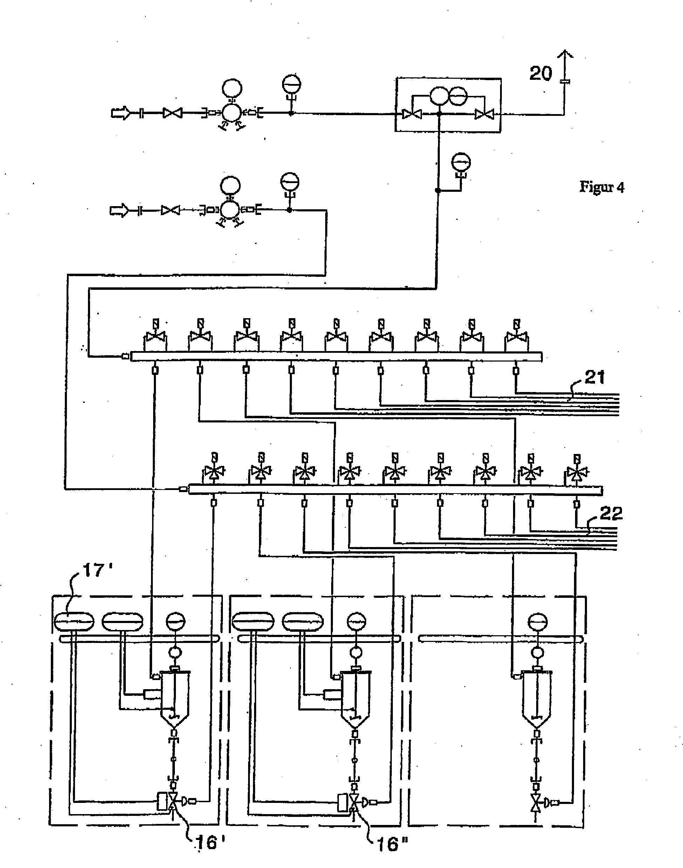

Fig.4 zeigt den schematischen Aufbau einer speziellen Ausführungsform der erfindungsgemäßen Dosierstation (10). Dabei umfaßt die Dosierstation zwei unterschiedliche Gasversorgungssysteme, die jeweils Inertgasdruckleitungen (21) und Druckluftleitungen (22) enthalten. Das Inertgasdruckleitungssystem steht in Verbindung mit den Vorratsgefäßen (5), und das Druckluftleitungssystem steht in Verbindung mit Magnetventilen, mittels derer die pneumatisch betriebenen Dosierventile (16', 16") in den Dosierköpfen (3.) gesteuert werden. Bevorzugt ist, dass die einzelnen Vorratsgefäße der Dosiermodule individuell angesteuert werden und mit unterschiedlichen Drücken an Inertgas beaufschlagt werden können. Weiter bevorzugt wird das Dosierventil mit der Heizung (17') geheizt.

Fig. 5.a zeigt den schematischen Aufbau eines Dosiermoduls mit Rührer (23) und Antriebsmotor (24) für die Rührvorrichtung;
Fig. 5.b zeigt eine Aufsicht auf eine karussellförmige Halterung (7). Die Ziffern in der Abbildung kennzeichnen die einzelnen Positionen, an denen die Dosiermodule (1, 1') befestigt werden. Im dargestellten Beispiel kann die Halterung (7) mit neun Dosiermodulen (1, 1') bestückt werden. Die Drehscheibe der Halterung kann von der Ausgangsposition ausgehend sowohl um 180° im Uhrzeigersinn als auch um 180° entgegen dem Uhrzeigersinn um den axialen Mittelschaft gedreht werden.

Fig. 6 zeigt eine Dosierstation (10), die eine karusselförmige Halterung (7) aufweist, wobei die Halterung mit unterschiedlichen Dosiermodulen (1, 1 ') bestückt ist. In der dargestellten Ausführungsform besitzen die einzelnen Dosiermodule auch eine mechanische Verbindung zum karussellförmig aufgebauten Probenteller der Halterung (7). In einer bevorzugten Ausführungsform ist diese mechanische Verbindung zusätzlich zum Steckverbindungselement (8) vorgesehen. Außerdem steht die Waage (12) auf einer Dämpfungsplatte (25), um die Waage möglichst gut gegenüber Störungen durch Vibrationen der Umgebung abzuschirmen. Weiterhin ist auch ein Abfallbehälter (26) gezeigt, der zur Aufnahme von Flüssigkeit zur Verfügung steht, beispielsweise unmittelbar vor dem Positionieren des entsprechenden Dosiermoduls über einem Probenaufnahmegefäß.

In einer bevorzugten Ausführungsform der Verfahrens gemäß der vorliegenden Erfindung sind mittels der Prozess-Steuerung verschiedene Dosiersequenzen, also Abfolgen von Zieldosier-Schritten, automatisch ausführbar, wobei die Auswahl der genau verwendeten Dosiersequenz unter anderem von der Gesamtmenge an zu dosierender Flüssigkeit abhängt. Die Auswahl der Dosiersequenz richtet sich nicht oder zumindest nicht ausschließlich nach der Viskosität der zu dosierenden Flüssigkeit.

Die Portionierung der zu dosierenden Flüssigkeit erfolgt vorzugsweise in 1 bis 6 oder mehr Teilmengen. Der Begriff "Dosierpuls" **DP** wie er nachfolgend verwendet wird bezieht sich auf eine solche Einzelportion. Eine Sequenz setzt sich aus einer Abfolge von Dosierpulsen DP₁, DP₂, DP₃... zusammen, wobei die einfachste Sequenz aus einem einzigen Dosierpuls DP₁ besteht.

Die Dauer eines einzelnen Dosierpulses wird durch die Ventilöffnungszeiten des Dosierventils, Δt, bestimmt. Vorzugsweise wird die Ventilöffnungszeit so gewählt, dass der Flussrate (Menge an ausdosierter Flüssigkeit pro Zeiteinheit) beim Ausdosieren der Flüssigkeit in einem linearen Bereich liegt. Die Linearität der Flussrate kann in den entsprechenden Kalibrier-Schritten überprüft werden.

Bei der Herstellung der Substanzformulierung werden die Dosierpulse und die dabei abgegebenen Gewichtsmengen vorzugsweise zur Kalibrierung des Dosiersystems verwendet, wobei es bei der Dosierung von geringen Gesamtmengen an Flüssigkeit erforderlich sein kann, das Verfahren mit einer geringeren Anzahl von Dosierpulsen durchzuführen.

Die folgenden beispielhaft gewählten Gewichtsangaben beziehen sich auf ein System, bei welchem die Dosierspitze und der Dosierdruck vorgegeben sind und die Flussrate einen Wert von 1 g/s hat: liegt die Gesamtmenge an zu dosierender Flüssigkeit oberhalb von 2 g, so wird eine Dosiersequenz vom Steuerprogramm ausgeführt, die vier oder mehr Dosierpulse einschließt. Liegt die Gesamtmenge an zu dosierender Substanz unterhalb von 2 g, so wird eine Dosiersequenz ausgeführt, die vier oder weniger Dosierpulse einschließt.

Um trotz der Verwendung einer variablen Anzahl von Dosierpulsen eine hohe Genauigkeit bei der Gesamtdosierung zu erreichen, werden jeweils zu Beginn jeder einzelnen Dosiersequenz zwei über die Ventilöffnungszeiten gesteuerte Dosierimpulse in das Probengefäß abgegeben, wobei der Dosierprozess bevorzugt folgendermaßen abläuft: Zunächst werden die ersten beiden Teilmengen unabhängig von der zu dosierenden Gesamtmenge nacheinander bei zwei relativ kurzen Ventilöffnungszeiten Δt₁ und Δt₂ in das Probengefäß dosiert. Im allgemeinen haben die Ventilöffnungszeiten genau festgelegt Werte, wobei Δt₁ im Bereich zwischen 100 und 1000 ms und Δt₂ im Bereich von 200 bis 1500 ms liegt. Der Wert von Δt₁ ist ungleich dem Wert von Δt₂, wobei zur Herstellung unterschiedlicher Substanzformulierungen üblicherweise jeweils das gleiche Wertepaar Δt₁ und Δt₂ zur Steuerung der Ventilöffnungszeit für die ersten beiden Dosierschritten verwendet wird.

Folgende Zahlenwerte zeigen ein Beispiel, um das erfindungsgemäße Verfahren näher zu erläutern: Durchführung von zwei aufeinander folgenden Dosierpulsen mit den Ventilöffnungszeiten Δt₁ = 200 ms und Δt₂ = 400 ms. Der Zeitraum zur Registrierung die Gewichtszunahme durch die Prozesssteuerung beträgt etwa 1000 bis 1500 ms pro Dosierpuls. Folglich dauert die doppelpulsartige Dosiersequenz inklusive der Registrierung der Gewichtswerte etwa 2600 bis 3600 ms (wobei die Berechnung wie folgt durchgeführt wird: Δt₁ + Δt₂ + 2 x Registrierzeit).

Mittels der Programmsteuerung werden die bei der Doppelpulsdosierung erfassten Werte zur Bestimmung der aktuellen Kalibrierung verwendet. Unter Berücksichtigung der aktuellen Kalibrierung wird die Ventilöffnungszeit Δt₃ berechnet, welche für den dritten Zugabeschritt gewählt wird.

Eine Dosierung der Gesamtmenge an zu dosierender Flüssigkeit durch eine Dreiersequenz d.h. von drei Dosierpulsen wird bevorzugt eingesetzt, wenn die Gesamtmenge an zu dosierender Substanz im Bereich von 0,8 bis 2 g liegt.

Die Dosierung unter Verwendung einer Vierersequenz wird bevorzugt für Gesamtmengen verwendet, deren Gewicht im Bereich zwischen 1,0 und 2 g liegt.

Zur Dosierung von Flüssigkeitsmengen, deren Gesamtmenge im Bereich von 0,2 bis 0,8 g liegt, wird eine abgewandelte Dreiersequenz verwendet, bei der das Probenaufnahmegefäß vor der Abgabe des dritten Dosierpulses gewechselt wird. Auf diese Weise wird durch die Abgabe von zwei Dosierpulsen in ein Testgefäß eine aktuelle Kalibrierung durchgeführt, die dann für die Abgabe des dritten Dosierpulses - nun wieder in das Probenaufnahmegefäß - genutzt wird.

Bezüglich der zu erreichenden Genauigkeit ist es bei diesem Verfahren besonders vorteilhaft, dass die Feindosierung in Verbindung mit Nachkalibrierung nun erst vor Erreichen der Zielmenge an zu dosierender Flüssigkeit vorgenommen wird. Dies liegt unter anderem auch daran, dass der Innendruck im Vorratsbehälter von der Füllhöhe abhängt, die sich während der Dosierung ändert sowie dass auch minimale Temperaturschwankungen innerhalb des Systems kompensiert werden.

Bei einer Flussrate von 1 g/s kann mittels des hier beschriebenen Dosierverfahrens die zu dosierende Gesamtmenge mit einer Dosiergenauigkeit von etwa 1 bis 2 mg dosiert werden. Bei einer Flussrate von 0,1 g/s kann mittels des hier beschriebenen Dosierverfahrens die Gesamtmenge mit einer Dosiergenauigkeit von etwa 0,1 bis 0,2 mg dosiert werden.

### Bezugszeichenliste:

- 1, 1': - Dosiermodul
- 2: - (austauschbare) Dosierspitze
- 3: - Dosierkopf
- 30: - Verbindungsleitung
- 32: - Verbindungsleitung
- 4: - Heizvorrichtung
- 5: - Vorratsgefäß
- 50: - Verschlussdeckel
- 6: - Rührer
- 7: - (karusellförmige) Halterung
- 8: - Steckverbindungselement
- 80: - Steckanschlüsse für elektrische Leitungen und Gasleitungen
- 9: - Aufnahmevorrichtung für Steckverbindungselement
- 10: - Dosierstation
- 11: - axialer Schaft
- 12: - Waage
- 13: - bewegliche Abdeckung
- 14: - Gestell
- 15: - Versorgungseinheit / Steuerung
- 16', 16": - Ventil am Dosierkopf
- 17', 17": - elektrische Verbindungsleitungen für Rührantrieb
- 18": Ventil
- 20: - Abluft
- 21: - Inertgasversorgungsleitungen
- 22: - Druckgasversorgungsleitungen
- 23: - Rührspindel
- 24: - Antriebsmotor für Rührvorrichtung
- 25: Dämpfungsplatte
- 26: Abfallbehälter

## Patentansprüche

1. Dosierstation (10) zum Dosieren von zumindest einer Flüssigkeit mit erhöhter Viskosität umfassend:
- zumindest eine Halterung (7) zur Aufnahme der zumindest vier Dosiermodule (1, 1'), wobei die Halterung zugleich eine automatisierte Einheit zum Positionieren sein kann;
- zumindest eine automatisierte Einheit zum Positionieren der zumindest vier Dosiermodule, welche entweder die Halterung (7) sein kann oder eine hiervon unabhängige Einheit zum Positionieren;
- zumindest eine Waage (12) zur Aufnahme von Probenaufnahme-gefäßen oder Testgefäßen; sowie
- eine Prozess-Steuerung,
**dadurch gekennzeichnet, dass** die Dosierstation weiterhin umfasst:
- zumindest vier Dosiermodule (1, 1') enthaltend zumindest ein Dosiermodul mit einer Flüssigkeit erhöhter Viskosität und enthaltend zumindest zwei Dosiermodule mit unterschiedlichen Flüssigkeiten;
wobei jedes Dosiermodul (1,1') mit der Halterung (7) über ein Steckverbindungselement (8) verbunden ist.

2. Dosierstation (10) nach Anspruch 1, **dadurch gekennzeichnet, dass** die unabhängige Einheit zum Positionieren eine Greifvorrichtung ist.

3. Dosierstation (10) nach Anspruch 1 oder 2, **dadurch gekennzeichnet, dass** zumindest ein Dosiermodul (1, 1') eine Dosierspitze (2), einen Dosierkopf (3) und ein Vorratsgefäß (5) umfasst, wobei sich Dosierspitze, Dosierkopf und Vorratsgefäß in fluidischer Verbindung befinden.

4. Dosierstation (10) nach Anspruch 3, **dadurch gekennzeichnet, dass** die Dosierspitze (2) austauschbar ist.

5. Dosierstation (10) nach einem der vorstehenden Ansprüche, **dadurch gekennzeichnet, dass** der Dosierkopf (3) ein Ventil ist oder umfasst, welches elektrisch oder pneumatisch angesteuert werden kann.

6. Dosierstation (10) nach einem der vorstehenden Ansprüche, **dadurch gekennzeichnet, dass** das Vorratsgefäß (5) und/oder die Dosierspitze (2) und/oder der Dosierkopf (3) eine Heizvorrichtung aufweist bzw. aufweisen.

7. Dosierstation (10) nach einem der vorstehenden Ansprüche, **dadurch gekennzeichnet, dass** das Dosiermodul (1, 1') zumindest eine Verbindungsleitung (32) zum Beaufschlagen der Flüssigkeit innerhalb des Vorratsgefäßes (5) des Dosiermoduls (1,1') mit einem Druckgas umfasst.

8. Dosierstation (10) nach einem der vorstehenden Ansprüche, **dadurch gekennzeichnet, dass** diese eine Einheit zur Druckkontrolle umfasst.

9. Dosierstation (10) nach einem der vorstehenden Ansprüche, **dadurch gekennzeichnet, dass** jedes Dosiermodul (1, 1') ein Steckverbindungselement (8) aufweist, sowie dass die Halterung (7) pro Dosiermodul eine Aufnahmevorrichtung (9) für das besagte Steckverbindungselement (8) aufweist.

10. Dosierstation (10) nach einem der vorstehenden Ansprüche, **dadurch gekennzeichnet, dass** neben der zumindest einen Verbindungsleitung (32) zur Zufuhr von Druckgas zum Vorratsgefäß (5) noch zumindest eine weitere Verbindungsleitung (30) vom Steckverbindungselement (8) zum Dosierkopf (3) vorliegt, welche eine Druckgasleitung oder eine elektrische Leitung sein kann.

11. Dosierstation (10) nach einem der vorstehenden Ansprüche, **dadurch gekennzeichnet, dass** die Halterung (7) zur Aufnahme der Dosiermodule (1, 1') als ein drehbares Karussell um einen axialen Schaft herum angeordnet ist.

12. Verfahren für das Hochdurchsatz-Dosieren von Flüssigkeiten mit erhöhter Viskosität und für die Hochdurchsatzformulierung von Substanzen umfassend zumindest die folgenden Schritte:
(i) Vorlegen von zumindest einer Flüssigkeit mit erhöhter Viskosität in zumindest einem Dosiermodul (1, 1') umfassend zumindest Vorratsgefäß (5), Dosierkopf (3) und Dosierspitze (2);
(ii) Bestücken einer Halterung (7) mit zumindest vier Dosiermodulen (1, 1'), wobei Schritt (ii) zeitlich auch vor Schritt (i) durchgeführt werden kann, und in jedem Fall als Ergebnis der Schritte (i) und (ii) zumindest ein Dosiermodul (1, 1') enthaltend zumindest eine Flüssigkeit mit erhöhter Viskosität in einer Halterung (7) gemeinsam mit zumindest drei weiteren Dosiermodulen (1,1') vorliegen muss;
(iii) automatisiertes Positionieren von zumindest einem Dosiermodul (1, 1'), enthaltend eine Flüssigkeit mit erhöhter Viskosität, über zumindest einem Testgefäß auf einer Waage (12);
(iv) Durchführen eines Kalibrier-Schrittes mit dem zumindest einem Dosiermodul (1, 1') aus Schritt (iii) enthaltend eine Flüssigkeit mit erhöhter Viskosität, zur Bestimmung der Menge an besagter Flüssigkeit, die pro Zeiteinheit im geöffneten Zustand des Dosierkopfes (3) aus dem Vorratsgefäß (5) durch die Dosierspitze (2) ausdosiert wird;
(v) automatisiertes Positionieren zumindest des Dosiermoduls (1, 1') aus Schritt (iii) über zumindest einem Probenaufnahmegefäß auf einer Waage (12);
(vi) Durchführen zumindest eines Zieldosier-Schrittes, in welchem ein vorbestimmter Bruchteil der insgesamt in ein Probenaufnahmegefäß einzudosierenden Flüssigkeit, oder die gesamte vorbestimmte Flüssigkeitsmenge, aus dem Dosiermodul (1, 1') aus Schritt (iii) in das Probenaufnahmegefäß auf der Waage (12) eindosiert wird,
**dadurch gekennzeichnet, dass** die Schritte (v) und (vi) beliebig oft und für eine beliebige Zahl von Dosiermodulen (1, 1') und/oder Probenaufnahmegefäße durchgeführt werden können, und der Schritt (iv) stets vor den ersten der gegebenenfalls beliebig oft durchgeführten Schritte (v) und (vi) durchgeführt wird, und dass im Schritt (ii) in der Halterung (7) vorgesehene Ausnehmungen mit entsprechenden Aussparungen eines Dosiermoduls (1, 1') in Eingriff gelangen.

13. Verfahren nach Anspruch 12, **dadurch gekennzeichnet, dass** in Schritt (ii) die Halterung (7) automatisiert durch eine Einheit zum Positionieren mit den zumindest vier Dosiermodulen (1, 1') bestückt wird, wobei die letzte Bewegung der Einheit zum Positionieren, welche ein jedes Dosiermodul (1, 1') mit der Halterung (7) in Eingriff und Halteschluss bringt, eine im wesentlichen lineare, einfache Bewegung ist.

14. Verfahren nach Anspruch 12 oder 13, wobei der Kalibrier-Schritt (iv) zumindest die folgenden Schritte umfasst:
(a) Ausdosieren einer von der Prozess-Steuerung vorbestimmten Menge an Flüssigkeit in ein Testgefäß auf einer Waage (12) durch Öffnen des Dosierkopfes (3), d.h. vorzugsweise eines Dosierventils, für eine von der Prozess-Steuerung vorbestimmte technisch sinnvolle Schaltzeit;
(b) Auswiegen der tatsächlich ausdosierten Menge;
(c) Bestimmen der pro Zeiteinheit tatsächlich ausdosierten Flüssigkeitsmenge unter Verwendung des Messwerts aus (b) durch die Prozess-Steuerung und Vergleich des so bestimmten Dosierparameters mit einem gegebenenfalls von der Prozess-Steuerung vorbestimmten Sollwert;
(d) gegebenenfalls Anpassen der Parameter der Prozess-Steuerung, d.h. insbesondere von Druck über der Flüssigkeit, Art der Dosierspitze sowie Temperatur, um den Sollwert zu erreichen, sowie gegebenenfalls Wiederholen der Schritte (a) bis (c).

15. Verfahren nach einem der Ansprüche 12 - 14, wobei der Zieldosier-Schritt (vi) zumindest die folgenden Teilschritte umfasst:
(vi') Durchführen eines ersten Zieldosier-Schrittes, in welchem ein vorbestimmter Bruchteil der insgesamt in ein Probenaufnahmegefäß einzudosierenden Flüssigkeit in ein Probenaufnahmegefäß auf einer Waage eindosiert wird, und zwar unter Verwendung der pro Zeiteinheit ausdosierten Flüssigkeitsmenge, wie diese im Kalibrier-Schritt (iv) bestimmt wurde;
(vi") Auswiegen der im Schritt (vi') tatsächlich zudosierten Flüssigkeitsmenge und Vergleich einem dem von der Prozess-Steuerung vorgegebenen Sollwert, gegebenenfalls mit nach dem Vergleich erfolgende Korrektur der pro Zeiteinheit ausdosierten Flüssigkeitsmenge;
(vi'") Durchführen eines zweiten Zieldosier-Schrittes, in welchem der fehlende Rest zur Gesamtmenge an insgesamt einzukassierender Flüssigkeit eindosiert wird, wiederum unter Verwendung der im Kalibrier-Schritt (iv) bestimmten Flüssigkeitsmenge pro Zeiteinheit, gegebenenfalls wie im Schritt (vi") korrigiert.

## Claims

1. Metering station (10) for the metering of at least one liquid with increased viscosity comprising:
- at least one support (7) for the receiving of the at least four metering modules (1, 1'), wherein the support at the same time may be an automated unit for the positioning;
- at least one automated unit for the positioning of the at least four metering modules, which may be either the support (7) or an unit for the positioning which is independent thereof;
- at least one scale (12) for the receiving of receiving vessels for samples or test vessels; and
- a process control;
**characterized in that** the metering station further comprises:
- at least four metering modules (1, 1') comprising at least one metering module with a liquid with increased viscosity and comprising at least two metering modules with different liquids;
wherein each metering module (1, 1') is connected to the support (7) via a plug connecting element (8).

2. Metering station (10) according to claim 1, **characterized in that** the independent unit for the positioning is a gripping device.

3. Metering station (10) according to claim 1 or 2, **characterized in that** at least one metering module (1,1') comprises a metering tip (2), a metering head (3) and a supply container (5), wherein metering tip, metering head and supply container are in fluidic connection.

4. Metering station (10) according to claim 3, **characterized in that** the metering tip (2) is exchangeable.

5. Metering station (10) according to any one of the preceding claims, **characterized in that** the metering head (3) is a valve or comprises a valve, which may be electrically or pneumatically activated.

6. Metering station (10) according to any one of the preceding claims, **characterized in that** the supply container (5) and/or the metering tip (2) and/or the metering head (3) comprises or comprise a heating device.

7. Metering station (10) according to any one of the preceding claims, **characterized in that** the metering module (1, 1') comprises at least one connecting pipe (32) for the loading of the liquid within the supply container (5) of the metering module (1, 1') with a pressure gas.

8. Metering station (10) according to any one of the preceding claims, **characterized in that** said metering station comprises an unit for the pressure control.

9. Metering station (10) according to any one of the preceding claims, **characterized in that** each metering module (1, 1') comprises a plug connecting element (8), and that the support (7) comprises per metering module a receiving device (9) for said plug connecting element (8).

10. Metering station (10) according to any one of the preceding claims, **characterized in that** besides the at least one connecting pipe (32) for the feed of pressure gas to the supply container (5) at least one further connecting pipe (30) from the plug connecting element (8) to the metering head (3) is available, which may be a pressure gas pipe or an electric line.

11. Metering station (10) according to any one of the preceding claims, **characterized in that** the support (7) for the receiving of the metering modules (1, 1') is arranged as a rotary carrousel around an axial piston.

12. Process for the high-throughput metering of liquids with increased viscosity and method for the high-throughput formulation of substances comprising at least the following steps:
(i) providing at least one liquid with increased viscosity in at least one metering module (1, 1') comprising at least supply container (5), metering head (3) and metering tip (2);
(ii) charging a support (7) with at least four metering modules (1,1'), wherein step (ii) may be temporarily performed also prior to step (i), and that in either case as result of steps (i) and (ii) at least one metering module (1, 1') comprising at least one liquid with increased viscosity must be available in support (7) together with at least three further metering modules (1, 1');
(iii) automatedly positioning at least one metering module (1,1'), comprising a liquid with increased viscosity, via at least one test vessel on a scale (12);
(iv) performing a calibration step with the at least one metering module (1, 1') from step (iii) comprising a liquid with increased viscosity, for the determination of the quantity of said liquid which per time unit is metered in opened condition of the metering head (3) from the supply container (5) via the metering tip (2);
(v) automatedly positioning at least one metering module (1, 1') from step (iii) via at least one receiving vessel for samples on a scale (12);
(vi) performing at least one target metering step in which a predetermined fraction of the liquid to be totally metered into a receiving vessel for samples or the total predetermined quantity of liquid is metered from the metering module (1, 1') from step (iii) into the receiving vessel for samples on scale (12),
**characterized in that** steps (v) and (vi) may be performed as often as required and for an arbitrary number of metering modules (1,1') and/or receiving vessels for samples, and that step (iv) is always performed prior to the first steps of the steps (v) and (vi), which may be performed as often as required, and that in step (ii) recesses which are provided in support (7) engage with respective notches within a metering module (1, 1').

13. Process according to claim 12, **characterized in that** in step (ii) the support (7) is automatedly charged via an unit for the positioning with the at least four metering modules (1, 1'), wherein the last motion of the unit for the positioning which brings each metering module (1, 1') into engagement and support connection with support (7) is substantially a linear, simple motion.

14. Process according to claim 12 or 13, wherein the calibration step (iv) comprises at least the following steps:
(a) metering a quantity of liquid which is predetermined by a process control into a test vessel on a scale (12) by means of the opening of the metering head (3), i.e., preferably of a metering valve, for a technically meaningful cycle time which is predetermined by the process control;
(b) weighing the factually metered quantity;
(c) determining the quantity of liquid which factually is metered per time unit by using the measurement value from (b) by the process control and comparing the thus determined metering parameter with a target value which, if required, is predetermined by the process control;
(d) adjusting the parameter of the process control if required, i.e., in particular of the pressure above the liquid, type of the metering tip and temperature, in order to reach the target value and, if required, repeating steps (a) to (c).

15. Process according to any one of claims 12 to 14, wherein the target metering step (vi) comprises at least the following partial steps:
(vi') performing a first target metering step in which a predetermined fraction of the liquid which totally is to be metered into a receiving vessel for samples is metered into a receiving vessel for samples on a scale, and in fact by using the quantity of the liquid which is metered per time unit, as determined in calibration step (iv);
(vi") weighing the quantity of liquid which factually is metered in step (vi') and comparing with a target value which is predetermined by the process control and, if required, correcting after the comparison the quantity of liquid which is metered per time unit;
(vi"') performing a second target metering step in which the missing balance with respect to the total quantity of the total liquid which is to be collected is metered, in turn by using the quantity of liquid which is determined per time unit in calibration step (iv) and, if required, correcting as in step (vi").

## Revendications

1. Poste de dosage (10) pour doser au moins un liquide d'une viscosité élevée, comprenant :,
- au moins un système de support (7) destiné à recevoir au moins quatre modules de dosage (1, 1'), le système de support pouvant être en même temps une unité automatisée pour positionner ;
- au moins une unité automatisée pour positionner lesdits au moins quatre modules de dosage, qui peut être, soit le système de support (7), soit une unité pour positionner, indépendante de ce système ;
- au moins un système de pesée (12) destiné à recevoir des récipients de collecte d'échantillon ou des récipients de test ; ainsi
- qu'une commande de gestion de processus,
**caractérisé en ce que** le poste de dosage comprend en outre :
- au moins quatre modules de dosage (1, 1') englobant au moins un module de dosage avec un liquide de viscosité élevée et englobant au moins deux modules de dosage avec des liquides différents ;
chaque module de dosage (1, 1') étant relié au système de support (7) par l'intermédiaire d'un élément de liaison enfichable (8).

2. Poste de dosage (10) selon la revendication 1, **caractérisé en ce que** l'unité indépendante pour positionner est un dispositif de préhension.

3. Poste de dosage (10) selon la revendication 1 ou la revendication 2, **caractérisé en ce qu'**au moins un module de dosage (1, 1') comprend une busette de dosage (2), une tête de dosage (3) et un récipient de réserve (5), la busette de dosage, la tête de dosage et le récipient de réserve étant en communication fluidique.

4. Poste de dosage (10) selon la revendication 3, **caractérisé en ce que** la busette de dosage (2) est interchangeable.

5. Poste de dosage (10) selon l'une des revendications précédentes, **caractérisé en ce que** la tête de dosage (3) est une vanne ou comporte une vanne, qui peut être commandée par voie électrique ou pneumatique.

6. Poste de dosage (10) selon l'une des revendications précédentes, **caractérisé en ce que** le récipient de réserve (5) et/ou la busette de dosage (2) et/ou la tête de dosage (3) présente ou présentent un dispositif de chauffage.

7. Poste de dosage (10) selon l'une des revendications précédentes, **caractérisé en ce que** le module de dosage (1, 1') comprend au moins une conduite de liaison (32) destinée à alimenter avec un gaz sous pression, le liquide se trouvant à l'intérieur du récipient de réserve (5) du module de dosage (1, 1').

8. Poste de dosage (10) selon l'une des revendications précédentes, **caractérisé en ce que** celui-ci comprend une unité de contrôle de pression.

9. Poste de dosage (10) selon l'une des revendications précédentes, **caractérisé en ce que** chaque module de dosage (1, 1') présente un élément de liaison enfichable (8), et **en ce que** le système de support (7) présente, par module de dosage, un dispositif de réception (9) pour ledit élément de liaison enfichable (8).

10. Poste de dosage (10) selon l'une des revendications précédentes, **caractérisé en ce qu'**en-dehors de ladite au moins une conduite de liaison (32) pour l'amenée de gaz sous pression au récipient de réserve (5), il existe au moins encore une autre conduite de liaison (30) de l'élément de liaison enfichable (8) à la tête de dosage (3), cette conduite de liaison pouvant être une conduite de gaz sous pression ou bien également une ligne électrique.

11. Poste de dosage (10) selon l'une des revendications précédentes, **caractérisé en ce que** le système de support (7) destiné à recevoir les modules de dosage (1, 1') est agencé autour d'un arbre axial, en tant que carrousel tournant.

12. Procédé pour le dosage à vitesse rapide de liquides de viscosité élevée et pour la formulation rapide de substances, comprenant au moins les étapes suivantes :
(i) mettre à disposition au moins un liquide de viscosité élevée dans au moins un module de dosage (1, 1') comprenant au moins un récipient de réserve (5), une tête de dosage (3) et une busette de dosage (2) ;
(ii) équiper un système de support (7) avec au moins quatre modules de dosage (1, 1'), l'étape (ii) pouvant également être effectuée, dans le temps, avant l'étape (i), avec dans tous les cas comme résultat des étapes (i) et (ii), la présence d'au moins un module de dosage (1, 1') renfermant au moins un liquide de viscosité élevée dans un système de support (7), en commun avec au moins trois autres modules de dosage (1, 1') ;
(iii) positionner automatiquement au moins un module de dosage (1, 1'), renfermant un liquide de viscosité élevée, au-dessus d'au moins un récipient de test sur un système de pesée (12) ;
(iv) effectuer une étape de calibrage avec au moins un module de dosage (1, 1') provenant de l'étape (iii) et renfermant un liquide de viscosité élevée, pour la détermination de la quantité dudit liquide, qui, par unité de temps, dans l'état ouvert de la tête de dosage (3), est délivrée de manière dosée par la busette de dosage (2), à partir du récipient de réserve (5) ;
(v) positionner automatiquement au moins le module de dosage (1, 1') de l'étape (iii) au-dessus d'au moins un récipient de collecte d'échantillon sur un système de pesée (12) ;
(vi) effectuer au moins une étape de dosage cible, au cours de laquelle une fraction prédéterminée de la totalité du liquide devant être envoyé de manière dosée dans un récipient de collecte d'échantillon, ou la quantité totale prédéterminée de liquide, est envoyée de manière dosée, du module de dosage (1, 1') de l'étape (iii), dans le récipient de collecte d'échantillon sur le système de pesée (12),
**caractérisé en ce que** les étapes (v) et (vi) peuvent être effectuées un nombre quelconque de fois et pour un nombre quelconque de modules de dosage (1, 1') et/ou de récipients de collecte d'échantillon, et l'étape (iv) est toujours effectuée avant les premières des étapes (v) et (vi) éventuellement effectuées un nombre quelconque de fois, et **en ce que** dans l'étape (ii), des évidements prévus dans le système de support (7) viennent en prise avec des encoches correspondantes d'un module de dosage (1, 1').

13. Procédé selon la revendication 12, **caractérisé en ce que** dans l'étape (ii), le système de support (7) est équipé automatiquement, par une unité pour positionner, avec lesdits au moins quatre modules de dosage (1, 1'), le dernier mouvement de l'unité pour positionner, qui amène chaque module de dosage (1, 1') en prise et en liaison fixe avec le système de support (7), est un mouvement simple, sensiblement linéaire.

14. Procédé selon la revendication 12 ou la revendication 13, d'après lequel l'étape de calibrage (iv) comprend au moins les étapes suivantes :
(a) délivrer de manière dosée une quantité de liquide prédéterminée par la commande de gestion de processus, dans un récipient de test sur un système de pesée (12), par ouverture de la tête de dosage (3), c'est-à-dire de préférence d'une vanne de dosage, pour une durée de commutation prédéterminée par la commande de gestion de processus et techniquement rationnelle ;
(b) peser la quantité effectivement délivrée de manière dosée ;
(c) déterminer, à l'aide de la commande de gestion de processus, la quantité de liquide effectivement délivrée de manière dosée, par unité de temps, en utilisant la valeur de mesure de l'étape (b), et comparer le paramètre de dosage ainsi déterminé avec une valeur de consigne éventuellement prédéterminée par la commande de gestion de processus ;
(d) le cas échéant, adapter les paramètres de la commande de gestion de processus, c'est-à-dire en particulier la pression au-dessus du liquide, le type de la busette de dosage ainsi que la température, pour atteindre la valeur de consigne, et, le cas échéant répéter les étapes (a) à (c).

15. Procédé selon l'une des revendications 12 à 14, d'après lequel l'étape de dosage cible (vi) comprend au moins les sous-étapes suivantes :
(vi') effectuer une première étape de dosage cible au cours de laquelle une fraction prédéterminée de la totalité du liquide devant être envoyé de manière dosée dans un récipient de collecte d'échantillon, est envoyée de manière dosée dans un récipient de collecte d'échantillon sur un système de pesée, et ceci en utilisant la quantité de liquide délivrée de manière dosée, par unité de temps, telle qu'elle a été déterminée dans l'étape de calibrage (iv) ;
(vi'') peser la quantité de liquide effectivement délivrée de manière dosée dans l'étape (vi'), et comparer avec une valeur de consigne prescrite par la commande de gestion de processus, avec, le cas échéant, après comparaison, correction de la quantité de liquide délivrée de manière dosée, par unité de temps ;
(vi''')effectuer une deuxième étape de dosage cible au cours de laquelle est délivré de manière dosée le reste manquant à la quantité totale de liquide devant être collectée, à nouveau en utilisant la quantité de liquide par unité de temps déterminée dans l'étape de calibrage (iv), le cas échéant corrigée comme dans l'étape (vi'').
